# EUROPÄISCHE PATENTSCHRIFT

(11) **EP 1 618 722 B1**
(45) Veröffentlichungstag und Bekanntmachung des Hinweises auf die Patenterteilung: **03.06.2009**
(21) Anmeldenummer: 04741490.9
(22) Anmeldetag: 29.04.2004
(51) Int. Cl.: H04L 29/06, H04L 12/58

(54) **VERFAHREN UND VORRICHTUNGEN ZUR ÜBERMITTLUNG VON NUTZDATEN MIT NUTZUNGSRECHTEN VON EINER TEILNEHMERSTATION PER FUNK**
METHOD AND DEVICES FOR THE WIRELESS TRANSMISSION OF USER DATA HAVING USAGE RIGHTS FROM A SUBSCRIBER STATION
PROCEDE ET DISPOSITIFS POUR TRANSMETTRE DES DONNEES UTILES AVEC DES DROITS D'UTILISATION, DEPUIS UNE STATION D'ABONNE, PAR VOIE HERTZIENNE

(30) Priorität: 30.04.2003 DE 10319531
(43) Veröffentlichungstag der Anmeldung: 25.01.2006
(73) Patentinhaber: SIEMENS AKTIENGESELLSCHAFT, 80333 München (DE)
(72) Erfinder: TRAUBERG, Markus, 38159 Velchede (DE); SCHMIDT, Andreas, 38124 Braunschweig (DE); LAUMEN, Josef, 81541 München (DE)
(86) Internationale Anmeldenummer: PCT/EP2004/050638
(87) Internationale Veröffentlichungsnummer: WO 2004/098147

(56) Entgegenhaltungen:
- WO-A-03/005145
- US-A1- 2002 078 890
- US-A1- 2002 144 116
- 3GPP SA: "3GPP TS 23.140 V6.0.0 (2002-12), 3rd Generation Partnership Project; Technical Specification Group Terminals; Multimedia Messaging Service (MMS); Functional description; Stage 2 (Release 6)" 3GPP TS 23.140 V6.0.0, XX, XX, 1. Dezember 2002 (2002-12-01), Seiten 1-155, XP002281428 in der Anmeldung erwähnt
- "Digital Rights Management Version 1.0" ANNOUNCEMENT OPEN MOBILE ALLIANCE, XX, XX, 5. September 2002 (2002-09-05), Seiten 1-21, XP002273196 in der Anmeldung erwähnt

## Beschreibung

Die Erfindung betrifft ein Verfahren zur Übermittlung von Nutzdaten von einer ersten Teilnehmerstation über eine oder mehrere die Nutzdaten weiterleitende Einrichtungen zu einer zweiten Teilnehmerstation. Weiterhin betrifft die Erfindung eine Vorrichtung zur Übermittlung von Nutzdaten über eine oder mehrere die Nutzdaten weiterleitende Einrichtungen zu einer Teilnehmerstation und eine Vorrichtung zum Weiterleiten von Nutzdaten, welche von einer ersten Teilnehmerstation gegebenenfalls über weitere die Nutzdaten weiterleitende Einrichtungen zu einer zweiten Teilnehmerstation übermittelt werden.

In Funkkommunikationssystemen werden Informationen (beispielsweise Sprache, Bildinformation, Videoinformation, SMS (Short Message Service) oder andere Nutzdaten) mit Hilfe von elektromagnetischen Wellen über eine Funkschnittstelle zwischen sendender und empfangender Teilnehmerstation übertragen. Das Abstrahlen der elektromagnetischen Wellen erfolgt dabei mit Trägerfrequenzen, die in dem für das jeweilige System vorgesehenen Frequenzband liegen. Ein Funkkommunikationssystem umfasst hierbei Teilnehmerstationen, z.B. Mobilstationen, Basisstationen, sowie weitere netzseitige Einrichtungen, welche z.B. die von einer Teilnehmerstation gesendeten Nutzdaten weiterleiten.

Steigende Bedeutung gewinnt in Funkkommunikationssystemen insbesondere im Hinblick auf Funkkommunikationssysteme der dritten Generation die Übermittlung von MMS (Multimedia Message Service) Nachrichten, bei denen multimediale Inhalte von einer Teilnehmerstation zu einer anderen übertragen werden können.

Oftmals soll bei der Versendung von Nutzdaten in einem Funkkommunikationssystem sichergestellt werden, dass die gesendeten Daten nur unter Beachtung von Nutzungsrechten verwendet werden, welche den Daten zugeordnet wurden. Mit dem Digital Rights Management (DRM) können digitale Daten mit einem Rechtesystem versehen werden, welche die Einstellung einer Reihe von Nutzungsrechten möglich macht. Um eine sichere Verbreitung von digitalen Inhalten zu realisieren, hat die Open Mobile Alliance (OMA) bislang drei Methoden zum Rechtemanagement unter den Begriffen "Forward Lock", "Combined Delivery" und "Separate Delivery" standardisiert:
OMA: Digital Rights Management Version 1.0; OMA-Download-DRM-v1_0-20020905-a, Version 05-September-2002, und
OMA: Digital Rights Management Format Version 1.0; OMA-Download-DRMCF-v1_0-20020913-a, Version 13-September-2002, und
OMA: Rights Expression Language Version 1.0; OMA-Download-DRMREL-vl_0-20020913-a, Version 13-September-2002.

Das Dokument WO 03/001545 A2 beschreibt ein Verfahren zur Kontrolle des Transfers von digitalen Inhalten. Hierzu werden Voucher eingesetzt, wobei die Voucher die Nutzrechte an den Inhalten representieren. Der Voucher regelt den Zugang zu den Inhalten. Die Inhalte können bei der Übertragung geschützt werden. Der Schlüssel zur Entschlüsselung des Inhaltes kann in dem Voucher enthalten sein.

Der Erfindung liegt die Aufgabe zugrunde, ein effektives Verfahren der eingangs genannten Art zur Übermittlung von Nutzdaten mit Nutzungsrechten von einer ersten Teilnehmerstation zu einer zweiten Teilnehmerstation aufzuzeigen. Weiterhin soll eine Vorrichtung zur Übermittlung von Nutzdaten mit Nutzungsrechten und eine Vorrichtung zum Weiterleiten von Nutzdaten mit Nutzungsrechten der eingangs genannten Art aufgezeigt werden.

Diese Aufgabe wird hinsichtlich des Verfahrens gelöst durch ein Verfahren mit den Merkmalen des Anspruchs 1.

Vorteilhafte Ausgestaltungen und Weiterbildungen des Verfahrens sind Gegenstand von Unteransprüchen.

Bei dem Verfahren zur Übermittlung von Nutzdaten von einer ersten Teilnehmerstation über eine oder mehrere die Nutzdaten weiterleitende Einrichtungen zu einer zweiten Teilnehmerstation versendet die erste Teilnehmerstation per Funk ein Signal. Erfindungsgemäß umfasst dieses Signal die unverschlüsselten Nutzdaten und Informationen über Nutzungsrechte der zweiten Teilnehmerstation an die Nutzdaten. Weiterhin umfasst das Signal eine Aufforderung an eine oder mehrere der weiterleitenden Einrichtungen, die Nutzdaten derart weiterzuleiten, dass der zweiten Teilnehmerstation durch mindestens eine erste Nachricht die Nutzdaten verschlüsselt übermittelt werden und dass entweder der zweiten Teilnehmerstation durch eine zweite Nachricht der Schlüssel zu den verschlüsselten Nutzdaten und Informationen über die Nutzungsrechte der zweiten Teilnehmerstation an den Nutzdaten übermittelt werden oder dass der zweiten Teilnehmerstation durch die mindestens eine erste Nachricht zusätzlich zu den verschlüsselten Nutzdaten der Schlüssel zu den verschlüsselten Nutzdaten, welcher teilnehmerspezifisch verschlüsselt ist, und weiterhin Informationen über die Nutzungsrechte der zweiten Teilnehmerstation an den Nutzdaten übermittelt werden.

Die erste Teilnehmerstation versendet das Signal per Funk, sie kann somit Bestandteil eines Funkkommunikationssystems sein. Hierbei kann es sich bei der ersten Teilnehmerstation zum Beispiel um eine Mobilstation oder um einen Computer mit einem Funkanschluss handeln. Die zweite Teilnehmerstation, an welche die Nutzdaten adressiert sind, kann Bestandteil des gleichen Funkkommunikationssystems sein, oder auch eines anderen funk- oder leitungsgestützten Kommunikationssystems.

Mindestens eine Einrichtung leitet die Nutzdaten auf dem Weg von der ersten Teilnehmerstation zu der zweiten Teilnehmerstation weiter. Die Weiterleitung über eine oder mehrere Einrichtungen kann per Funk oder auch über Leitungen erfolgen.

Gemäß der Aufforderung der ersten Teilnehmerstation sind die Nutzdaten an die zweite Teilnehmerstation unter Verwendung eines gesicherten Übertragungsverfahrens wie z.B. des Separate-Delivery-Verfahrens, zu übermitteln. Gemäß dem gesicherten Übertragungsverfahren erhält die zweite Teilnehmerstation eine erste Nachricht mit den verschlüsselten Nutzdaten und eine zweite Nachricht mit dem passenden Schlüssel zu den verschlüsselten Nutzdaten und Informationen über Nutzungsrechte an den Nutzdaten. Die Reihenfolge des Empfangs der beiden Nachrichten in der zweiten Teilnehmerstation ist dabei nicht vorgegeben. Die beiden Nachrichten können auf unterschiedlichen Übertragungskanälen an die zweite Teilnehmerstation übertragen werden. Auch die Datentypen der beiden Nachrichten können sich voneinander unterscheiden. Es ist jedoch auch möglich, dass das gesicherte Übertragungsverfahren, welches die erste Teilnehmerstation anfordert, darin besteht, dass die zweite Teilnehmerstation nur eine Nachricht empfängt, welche sowohl die verschlüsselten Nutzdaten, als auch den Schlüssel, als auch die Informationen über Nutzungsrechte an den Nutzdaten umfasst. In diesem Fall ist der Schlüssel teilnehmerstationsspezifisch verschlüsselt, so dass nur die zweite Teilnehmerstation eine Entschlüsselung des Schlüssels vornehmen kann. Dies kann dadurch realisiert werden, dass zur Verschlüsselung des Schlüssels ein öffentlicher Schlüssel der zweiten Teilnehmerstation verwendet wird. Zur Entschlüsselung des Schlüssels verwendet dann die zweite Teilnehmerstation einen privaten Schlüssel.

Die zu übermittelnden Nutzdaten können Bestandteil einer Nachricht mit weiteren nicht gesichert oder auch gesichert zu übertragenden Daten sein. So kann zum Beispiel eine MMS-Nachricht versendet werden, wobei lediglich ein bestimmter Teil der MMS-Nachricht der gesicherten Datenübertragung gemäß dem erfindungsgemäßen Verfahren unterliegen soll.

Bei der Aufforderung der ersten Teilnehmerstation in dem versendeten Signal kann es sich um eine explizite Aufforderung an eine oder mehrere die Nutzdaten weiterleitende Einrichtungen handeln, eine geeignete Verschlüsselung und Aufspaltung des Signals in mehrere Nachrichten vorzunehmen. Es ist auch möglich, dass die erste Teilnehmerstation als Aufforderung ein oder mehrere Symbole sendet, an denen eine oder mehrere der die Nutzdaten weiterleitenden Einrichtungen erkennen, dass eine gesicherte Datenübertragung gemäß der Versendung zweier Nachrichten eingesetzt werden soll. Weiterhin kann die erste Teilnehmerstation in der Aufforderung explizit eines der beiden beschriebenen gesicherten Übertragungsverfahren als zu verwendendes Übertragungsverfahren benennen, oder die Wahl zwischen den beiden gesicherten Übertragungsverfahren einer oder mehreren weiterleitenden Einrichtungen überlassen.

Die zweite Teilnehmerstation kann bei Verwendung von zwei Nachrichten nach dem alleinigen Empfang der ersten Nachricht mit den verschlüsselten Nutzdaten diese Nutzdaten nicht verwenden. Hierzu benötigt sie den passenden Schlüssel, welcher mittels der zweiten Nachricht an sie übertragen wird. Mit der zweiten Nachricht werden ihr auch ihre Nutzungsrechte an den Nutzdaten zugestellt.

Bei den Nutzungsrechten kann es sich zum Beispiel um Rechte betreffend das Abspielen, Drucken oder Anzeigen der Nutzdaten handeln. Weiterhin können die Nutzungsrechte Einschränkungen bezüglich der Nutzung der Nutzdaten in bezug auf die Anzahl, den Zeitraum, das Kommunikationssystem, in welchem die Nutzdaten verwendet werden dürfen, oder Eigenschaften der Teilnehmerstation oder des Teilnehmers, wie zum Beispiel seine SIM, beinhalten. Vorteilhafterweise weist die zweite Teilnehmerstation eine entsprechende Software auf, welche verschiedenen Applikationen den Zugang zu den unverschlüsselten Nutzdaten nur unter Beachtung der Nutzungsrechte ermöglicht.

In einer Weiterbildung der Erfindung speichert eine erste die Nutzdaten weiterleitende Einrichtung, auf die Aufforderung der ersten Teilnehmerstation hin, die von der ersten Teilneh merstation unverschlüsselt gesendeten Nutzdaten, und leitet Identifikationsinformationen der gespeicherten Nutzdaten weiter. Eine direkte Weiterleitung der Nutzdaten findet in diesem Fall nicht statt. Bei der Identifikationsinformation kann es sich zum Beispiel um eine Referenz auf die Nutzdaten in Form einer URL (Uniform Resource Locator) handeln. Die erste die Nutzdaten weiterleitende Einrichtung muss das Signal mit den Nutzdaten nicht direkt von der ersten Teilnehmerstation empfangen haben, vielmehr kann das von der ersten Teilnehmerstation gesendete Signal bis zu der ersten die Nutzdaten weiterleitende Einrichtung über eine oder mehrere weiterleitende Einrichtungen weitergeleitet worden sein.

Gemäß dieser Weiterbildung der Erfindung kann die erste die Nutzdaten weiterleitende Einrichtung aus dem von der ersten Teilnehmerstation gesendeten Signal die unverschlüsselten Nutzdaten extrahieren und das restliche Signal weiterleiten.
Insbesondere können auch die Nutzungsrechte mit der Identifikationsinformation der gespeicherten Nutzdaten weitergeleitet werden.

In einer Ausgestaltung der Erfindung übermittelt die erste die Nutzdaten weiterleitende Einrichtung die Nutzdaten auf eine Anforderung, welche die Identifikationsinformation der gespeicherten Nutzdaten enthält, einer zweiten die Nutzdaten weiterleitenden Einrichtung unverschlüsselt. Zwischen der ersten die Nutzdaten weiterleitenden Einrichtung und der zweiten die Nutzdaten weiterleitenden Einrichtung kann eine Weiterleitung der Nutzdaten durch eine oder mehrere weitere die Nutzdaten weiterleitende Einrichtungen erfolgen. Die zweite die Nutzdaten weiterleitende Einrichtung empfängt die von der ersten die Nutzdaten weiterleitende Einrichtung gesendete Identifikationsinformation der gespeicherten Nutzdaten. Bezugnehmend auf diese Identifikationsinformation fordert die zweite die Nutzdaten weiterleitende Einrichtung die Nutzdaten von der ersten die Nutzdaten weiterleitenden Einrichtung an, welche die Nutzdaten gespeichert hat. Die Über mittlung der Nutzdaten von der ersten die Nutzdaten weiterleitenden Einrichtung zu der zweiten die Nutzdaten weiterleitenden Einrichtung erfolgt hierbei, ohne dass die erste die Nutzdaten weiterleitende Einrichtung diese zuvor verschlüsselt hat.

Vorzugsweise verschlüsselt die zweite die Nutzdaten weiterleitende Einrichtung die Nutzdaten im folgenden und übermittelt die verschlüsselten Nutzdaten durch mindestens eine erste Nachricht an die zweite Teilnehmerstation. Weiterhin übermittelt die zweite die Nutzdaten weiterleitende Einrichtung entweder den Schlüssel zu den verschlüsselten Nutzdaten und Informationen über die Nutzungsrechte der zweiten Teilnehmerstation an die Nutzdaten durch eine zweite Nachricht an die zweite Teilnehmerstation, oder sie übermittelt zusätzlich zu den verschlüsselten Nutzdaten den Schlüssel zu den verschlüsselten Nutzdaten, welcher teilnehmerstationsspezifisch verschlüsselt ist, und Informationen über die Nutzungsrechte der zweiten Teilnehmerstation an den Nutzdaten durch die mindestens eine erste Nachricht an die zweite Teilnehmerstation. Die Verschlüsselung des Schlüssels findet im zweiten Fall in der zweiten die Nutzdaten weiterleitenden Einrichtung statt. Zwischen der zweiten die Nutzdaten weiterleitenden Einrichtung und der zweiten Teilnehmerstation kann eine Weiterleitung der Nutzdaten durch eine oder mehrere weitere die Nutzdaten weiterleitende Einrichtungen erfolgen. Somit stellt die zweite die Nutzdaten weiterleitende Einrichtung sicher, dass die Nutzdaten die zweite Teilnehmerstation gemäß einem von der ersten Teilnehmerstation angeforderten gesicherten Übertragungsverfahren erreichen. Bei keinem der beiden gesicherten Übertragungsverfahren erreichen die Nutzdaten die zweite Teilnehmerstation unverschlüsselt.

In einer anderen Ausgestaltung der Erfindung verschlüsselt die erste die Nutzdaten weiterleitende Einrichtung auf eine Anforderung einer zweiten die Nutzdaten weiterleitenden Einrichtung, welche die Identifikationsinformation der gespei cherten Nutzdaten enthält, die Nutzdaten. Weiterhin übermittelt sie die verschlüsselten Nutzdaten und den Schlüssel zu den verschlüsselten Nutzdaten der zweiten die Nutzdaten weiterleitenden Einrichtung. Es ist möglich, dass die erste die Nutzdaten weiterleitende Einrichtung die Nutzungsrechte an den Nutzdaten zusammen mit dem Schlüssel zu den verschlüsselten Nutzdaten der zweiten die Nutzdaten weiterleitenden Einrichtung übermittelt. In diesem Fall wurde bereits die zweite Nachricht, welche die zweite Teilnehmerstation aufgrund des einen gesicherten Übertragungsverfahrens empfangen soll, von der ersten die Nutzdaten weiterleitenden Einrichtung bereitgestellt. Zusammen mit der Anforderung der zweiten die Nutzdaten weiterleitenden Einrichtung nach Übermittlung der verschlüsselten Nutzdaten kann diese auch eine Anpassung der Nutzdaten an die Eigenschaften der zweiten Teilnehmerstation von der ersten die Nutzdaten weiterleitenden Einrichtung anfordern. Diese Anpassung kann dann durch die erste die Nutzdaten weiterleitende Einrichtung vor der Verschlüsselung der Nutzdaten erfolgen.

Vorzugsweise übermittelt daraufhin die zweite die Nutzdaten weiterleitende Einrichtung die verschlüsselten Nutzdaten durch mindestens eine erste Nachricht an die zweite Teilnehmerstation. Weiterhin übermittelt die zweite die Nutzdaten weiterleitende Einrichtung entweder den Schlüssel zu den verschlüsselten Nutzdaten und Informationen über die Nutzungsrechte der zweiten Teilnehmerstation an den Nutzdaten durch eine zweite Nachricht an die zweite Teilnehmerstation oder sie übermittelt zusätzlich zu den verschlüsselten Nutzdaten den Schlüssel zu den verschlüsselten Nutzdaten, welcher teilnehmerstationsspezifisch verschlüsselt ist, und Informationen über die Nutzungsrechte der zweiten Teilnehmerstation an den Nutzdaten durch die mindestens eine erste Nachricht an die zweite Teilnehmerstation. Im zweiten Fall findet die teilnehmerstationsspezifische Verschlüsselung des Schlüssels entweder in der ersten oder in der zweiten die Nutzdaten weiterleitenden Einrichtung statt.

In einer anderen Ausgestaltung der Erfindung übermittelt die erste die Nutzdaten weiterleitende Einrichtung auf eine Anforderung, welche die Identifikationsinformation der gespeicherten Nutzdaten enthält, der zweiten Teilnehmerstation die Nutzdaten verschlüsselt durch mindestens eine erste Nachricht. Weiterhin übermittelt die erste die Nutzdaten weiterleitende Einrichtung entweder den Schlüssel zu den verschlüsselten Nutzdaten und Informationen über die Nutzungsrechte der zweiten Teilnehmerstation an den Nutzdaten durch eine zweite Nachricht an die zweite Teilnehmerstation oder sie übermittelt zusätzlich zu den verschlüsselten Nutzdaten den Schlüssel zu den verschlüsselten Nutzdaten, welcher teilnehmerstationsspezifisch verschlüsselt ist, und Informationen über die Nutzungsrechte der zweiten Teilnehmerstation an den Nutzdaten durch die mindestens eine erste Nachricht an die zweite Teilnehmerstation. Die Anforderung der Nutzdaten durch die zweite Teilnehmerstation kann zum Beispiel dann erfolgen, wenn keine zweite die Nutzdaten weiterleitende Einrichtung das oder ein von der ersten Teilnehmerstation angefordertes gesichertes Datenübertragungsverfahren unterstützt. In diesem Fall stellt die erste die Nutzdaten weiterleitende Einrichtung, welche die Nutzdaten gespeichert hat, die erste und gegebenenfalls auch die zweite Nachricht zur Verfügung. Zwischen der ersten die Nutzdaten weiterleitenden Einrichtung und der zweiten Teilnehmerstation kann eine Weiterleitung der Nutzdaten über eine beliebige Anzahl an die Nutzdaten weiterleitenden Einrichtungen erfolgen.

Gemäß einer Weiterbildung der Erfindung verschlüsselt auf die Aufforderung der ersten Teilnehmerstation hin eine erste die Nutzdaten weiterleitende Einrichtung die von der ersten Teilnehmerstation unverschlüsselt gesendeten Nutzdaten, leitet die verschlüsselten Nutzdaten weiter, speichert den Schlüssel zu den verschlüsselten Nutzdaten und leitet Identifikationsinformation des gespeicherten Schlüssels weiter. Eine direkte Weiterleitung des Schlüssels, d.h. eine Weiterleitung ohne Anforderung, erfolgt hierbei nicht. Zusammen mit der Speicherung des Schlüssels ist auch eine Speicherung der Nutzungsrechte an die Nutzdaten möglich. Die Nutzungsrechte können jedoch auch von der ersten die Nutzdaten weiterleitenden Einrichtung weitergeleitet werden. In dieser Weiterbildung der Erfindung entnimmt die erste die Nutzdaten weiterleitende Einrichtung dem Signal von seitens der ersten Teilnehmerstation die Nutzdaten, verschlüsselt diese, und fügt diese wieder in ein weiterzuleitendes Signal ein. Die gegebenenfalls restlichen Bestandteile der Nachricht von der ersten Teilnehmerstation werden entweder zusammen mit den Nutzungsrechten oder auch ohne die Nutzungsrechte weitergeleitet.

In einer Ausgestaltung der Erfindung übermittelt die erste die Nutzdaten weiterleitende Einrichtung auf eine Anforderung, welche die Identifikationsinformation des gespeicherten Schlüssels enthält, einer zweiten die Nutzdaten weiterleitenden Einrichtung den Schlüssel zu den verschlüsselten Nutzdaten. Durch eine Speicherung des Schlüssels und eine Weiterleitung erst auf Anforderung kann sichergestellt werden, dass nur eine solche die Nutzdaten weiterleitende Einrichtung Zugriff auf die unverschlüsselten Nutzdaten erhält, welche das von der ersten Teilnehmerstation geforderte gesicherte Übertragungsverfahren unterstützt.

Vorteilhafterweise übermittelt die zweite die Nutzdaten weiterleitende Einrichtung die verschlüsselten Nutzdaten durch mindestens eine erste Nachricht an die zweite Teilnehmerstation. Weiterhin übermittelt die zweite die Nutzdaten weiterleitende Einrichtung entweder den Schlüssel zu den verschlüsselten Nutzdaten und Informationen über die Nutzungsrechte der zweiten Teilnehmerstation an den Nutzdaten durch eine zweite Nachricht an die zweite Teilnehmerstation, oder sie übermittelt zusätzlich zu den verschlüsselten Nutzdaten den Schlüssel zu den verschlüsselten Nutzdaten, welcher teilnehmerstationsspezifisch verschlüsselt ist, und Informationen über die Nutzungsrechte der zweiten Teilnehmerstation an den Nutzdaten durch die mindestens eine erste Nachricht an die zweite Teilnehmerstation. Die teilnehmerstationsspezifische Verschlüsselung des Schlüssels kann sowohl in der ersten als auch in der zweiten die Nutzdaten weiterleitenden Einrichtung erfolgen.

Es ist jedoch auch möglich, das die zweite die Nutzdaten weiterleitende Einrichtung die verschlüsselten Nutzdaten entschlüsselt und erneut verschlüsselt und die erneut verschlüsselten Nutzdaten durch mindestens eine erste Nachricht an die zweite Teilnehmerstation übermittelt. Weiterhin übermittelt die zweite die Nutzdaten weiterleitende Einrichtung entweder den Schlüssel zu den verschlüsselten Nutzdaten und Informationen über die Nutzungsrechte der zweiten Teilnehmerstation an den Nutzdaten durch eine zweite Nachricht an die zweite Teilnehmerstation, oder sie übermittelt zusätzlich zu den erneut verschlüsselten Nutzdaten den Schlüssel zu den verschlüsselten Nutzdaten, welcher teilnehmerstationsspezifisch verschlüsselt ist, und Informationen über die Nutzungsrechte der zweiten Teilnehmerstation an den Nutzdaten durch die mindestens eine erste Nachricht an die zweite Teilnehmerstation. In letzterem Fall findet die teilnehmerstationsspezifische Verschlüsselung des Schlüssels in der zweiten die Nutzdaten weiterleitenden Einrichtung statt. Eine Entschlüsselung und erneute Verschlüsselung der Nutzdaten durch die zweite die Nutzdaten weiterleitende Einrichtung hat den Vorteil, dass die entschlüsselten Nutzdaten den Eigenschaften der zweiten Teilnehmerstation zum Beispiel in Bezug auf von ihr verarbeitbare Codecs durch eine Bearbeitung der unverschlüsselten Nutzdaten in der zweiten die Nutzdaten weiterleitenden Einrichtung angepasst werden können.

In einer anderen Ausgestaltung der Erfindung übermittelt die erste die Nutzdaten weiterleitende Einrichtung auf eine Anforderung, welche die Identifikationsinformation des gespeicherten Schlüssels enthält, der zweiten Teilnehmerstation den Schlüssel zu den verschlüsselten Nutzdaten und übermittelt dieser Informationen über die ihre Nutzungsrechte. Diese Situation kann zum Beispiel dann eintreten, wenn keine weitere die Nutzdaten weiterleitende Einrichtung das oder eines von der ersten Teilnehmerstation angeforderte gesicherte Übertragungsverfahren unterstützt. In diesem Fall stellt die erste die Nutzdaten weiterleitende Einrichtung die zweite Nachricht mit dem Schlüssel zu den Nutzdaten und den Informationen über die Nutzungsrechte der zweiten Teilnehmerstation zur Verfügung.

Die Verfahrensschritte, welche ,wie oben beschrieben, eine oder zwei die Nutzdaten weiterleitende Einrichtungen durchführen, können auch auf eine beliebige Anzahl an die Nutzdaten weiterleitenden Einrichtungen aufgeteilt werden.

Die oben genannte Aufgabe hinsichtlich der Vorrichtung zur Übermittlung von Nutzdaten wird durch eine Vorrichtung mit den Merkmalen des Anspruchs 13 gelöst.

Die Vorrichtung zur Übermittlung von Nutzdaten über eine oder mehrere die Nutzdaten weiterleitende Einrichtungen zu einer Teilnehmerstation, weist Mittel zum Erzeugen und Versenden eines Signals über Funk auf, wobei das Signal umfasst: die unverschlüsselten Nutzdaten, Informationen über Nutzungsrechte der Teilnehmerstation an den Nutzdaten, eine Aufforderung an eine oder mehrere der weiterleitenden Einrichtungen, die Nutzdaten derart weiterzuleiten, dass der Teilnehmerstation durch mindestens eine erste Nachricht die Nutzdaten verschlüsselt übermittelt werden und dass entweder der Teilnehmerstation durch eine zweite Nachricht der Schlüssel zu den verschlüsselten Nutzdaten und Informationen über die Nutzungsrechte der Teilnehmerstation an den Nutzdaten übermittelt werden oder dass der Teilnehmerstation durch die mindestens eine erste Nachricht der Schlüssel zu den verschlüsselten Nutzdaten, welcher teilnehmerstationsspezifisch verschlüsselt ist, und Informationen über die Nutzungsrechte der Teilnehmerstation an den Nutzdaten übermittelt werden.

Die erfindungsgemäße Vorrichtung zur Übermittlung von Nutzdaten kann insbesondere zur Ausführung eines erfindungsgemäßen Verfahrens eingesetzt werden. Hierfür können weitere geeignete Mittel in der Vorrichtung zur Übermittlung von Nutzdaten vorgesehen sein.

Die oben genannte Aufgabe hinsichtlich der Vorrichtung zum Weiterleiten von Nutzdaten wird durch eine Vorrichtung zum Weiterleiten von Nutzdaten mit den Merkmalen des Anspruchs 14 gelöst.

Erfindungsgemäß weist die Vorrichtung zum Weiterleiten von Nutzdaten, welche von einer ersten Teilnehmerstation gegebenenfalls über weitere die Nutzdaten weiterleitende Einrichtung zu einer zweiten Teilnehmerstation übermittelt werden, weist Mittel zum Empfangen eines Signals von seitens der ersten Teilnehmerstation auf. Dieses Signal umfasst die unverschlüsselten Nutzdaten, Informationen über Nutzungsrechte der zweiten Teilnehmerstation an den Nutzdaten, und eine Aufforderung an eine oder mehrere der weiterleitenden Einrichtungen, die Nutzdaten derart weiterzuleiten, dass der zweiten Teilnehmerstation durch mindestens eine erste Nachricht die Nutzdaten verschlüsselt übermittelt werden und dass entweder der zweiten Teilnehmerstation durch eine zweite Nachricht der Schlüssel zu den verschlüsselten Nutzdaten und Informationen über die Nutzungsrechte der zweiten Teilnehmerstation an den Nutzdaten übermittelt werden, oder dass der zweiten Teilnehmerstation durch die mindestens eine erste Nachricht der Schlüssel zu den verschlüsselten Nutzdaten, welcher teilnehmerstationsspezifisch verschlüsselt ist, und Informationen über die Nutzungsrechte der zweiten Teilnehmerstation an den Nutzdaten übermittelt werden. Weiterhin weist die erfindungsgemäße Vorrichtung Mittel zur Verarbeitung der Aufforderung der ersten Teilnehmerstation auf, und Mittel zum Speichern der unverschlüsselten Nutzdaten, sowie Mittel zum Weiterlei ten von Identifikationsinformation der gespeicherten Nutzdaten.

Zusätzlich können Mittel vorhanden sein zum Weiterleiten von weiteren Bestandteilen des von seitens der ersten Teilnehmerstation empfangenen Signals. Eine Verarbeitung der Aufforderung der ersten Teilnehmerstation bedeutet, dass die Vorrichtung zum Weiterleiten von Nutzdaten anhand der betreffenden Mittel erkennt, ob sie von der Aufforderung zur gesicherten Datenübertragung betroffen ist. Sollte dies gegeben sein, erfolgt eine entsprechende Bearbeitung des von seitens der ersten Teilnehmerstation gegebenenfalls über weitere die Nutzdaten weiterleitende Einrichtungen empfangenen Signals. Hierbei können die unverschlüsselten Nutzdaten in der Vorrichtung zum Weiterleiten von Nutzdaten gespeichert werden. Weiterhin können weitere Bestandteile des von seitens der ersten Teilnehmerstation empfangenen Signals weitergeleitet werden, und ebenso die Identifikationsinformation der gespeicherten Nutzdaten. Weitere Bestandteile des von seitens der ersten Teilnehmerstation empfangenen Signals betreffen z.B. nicht gesichert zu übertragende Daten und auch die Nutzungsrechte an den Nutzdaten. Weiterhin kann die erfindungsgemäße Vorrichtung Mittel zum Weiterleiten der gespeicherten Nutzdaten zu einem späteren Zeitpunkt, insbesondere auf Anforderungen unter Verwendung der Identifikationsinformation, aufweisen.

Weiterhin wird die oben genannte Aufgabe hinsichtlich der Vorrichtung zum Weiterleiten von Nutzdaten durch eine Vorrichtung zum Weiterleiten von Nutzdaten mit den Merkmalen des Anspruchs 15 gelöst.

Die erfindungsgemäße Vorrichtung zum Weiterleiten von Nutzdaten, welche von einer ersten Teilnehmerstation gegebenenfalls über weitere die Nutzdaten weiterleitende Einrichtungen zu einer zweiten Teilnehmerstation übermittelt werden, weist Mittel zum Empfangen eines Signals von seitens der ersten Teilnehmerstation auf. Dieses Signal umfasst die unverschlüs selten Nutzdaten, Informationen über Nutzungsrechte der zweiten Teilnehmerstation an den Nutzdaten, und eine Aufforderung an eine oder mehrere der weiterleitenden Einrichtungen, die Nutzdaten derart weiterzuleiten, dass der zweiten Teilnehmerstation durch mindestens eine erste Nachricht die Nutzdaten verschlüsselt übermittelt werden und dass entweder der zweiten Teilnehmerstation durch eine zweite Nachricht der Schlüssel zu den verschlüsselten Nutzdaten und Informationen über die Nutzungsrechte der zweiten Teilnehmerstation an den Nutzdaten übermittelt werden, oder dass der zweiten Teilnehmerstation durch die mindestens eine erste Nachricht der Schlüssel zu den verschlüsselten Nutzdaten, welcher teilnehmerstationsspezifisch verschlüsselt ist, und Informationen über die Nutzungsrechte der zweiten Teilnehmerstation an den Nutzdaten übermittelt werden. Weiterhin weist die erfindungsgemäße Vorrichtung Mittel zur Verarbeitung der Aufforderung der ersten Teilnehmerstation auf, und Mittel zum Verschlüsseln der unverschlüsselten Nutzdaten, sowie Mittel zum Speichern des Schlüssels zu den verschlüsselten Nutzdaten und Mittel zum Weiterleiten der verschlüsselten Nutzdaten und von Identifikationsinformation des Schlüssels. Weiterhin können Mittel zum Weiterleiten von weiteren Bestandteilen des von seitens der ersten Teilnehmerstation empfangenen Signals vorliegen.

Die erfindungsgemäße Vorrichtung zum Weiterleiten von Nutzdaten ist somit aufgrund ihrer Mittel in der Lage, anhand der Aufforderung der ersten Teilnehmerstation zu erkennen, dass das von seitens der ersten Teilnehmerstation empfangene Signal gemäß der gesicherten Datenübertragung bearbeitet werden soll. Hierbei ist eine Entnahme der unverschlüsselten Nutzdaten aus dem Signal möglich, daraufhin eine Verschlüsselung und ein Einfügen der so verschlüsselten Nutzdaten in ein weiterzuleitendes Signal. Der Schlüssel zu den verschlüsselten Nutzdaten kann in einem geeigneten Speicher gespeichert werden. Die gegebenenfalls weiteren Bestandteile des von seitens der ersten Teilnehmerstation empfangenen Signals können weitergeleitet werden, ebenso die Identifikationsinformation des gespeicherten Schlüssels. Weiterhin können Mittel zum späteren Weiterleiten des gespeicherten Schlüssels, insbesondere auf Anforderung unter Verwendung der Identifikationsinformation, vorgesehen sein.

Im folgenden wird die Erfindung anhand eines Ausführungsbeispiels näher erläutert. Dabei zeigen
- Figur 1:: schematisch eine erste erfindungsgemäße Übermittlung von Nutzdaten von einer ersten zu einer zweiten Mobilstation,
- Figur 2:: schematisch eine zweite erfindungsgemäße Übermittlung von Nutzdaten von einer ersten zu einer zweiten Mobilstation,
- Figur 3:: eine erfindungsgemäße Vorrichtung zur Übermittlung von Nutzdaten,
- Figur 4:: eine erste erfindungsgemäße Vorrichtung zum Weiterleiten von Nutzdaten,
- Figur 5:: eine zweite erfindungsgemäße Vorrichtung zum Weiterleiten von Nutzdaten.

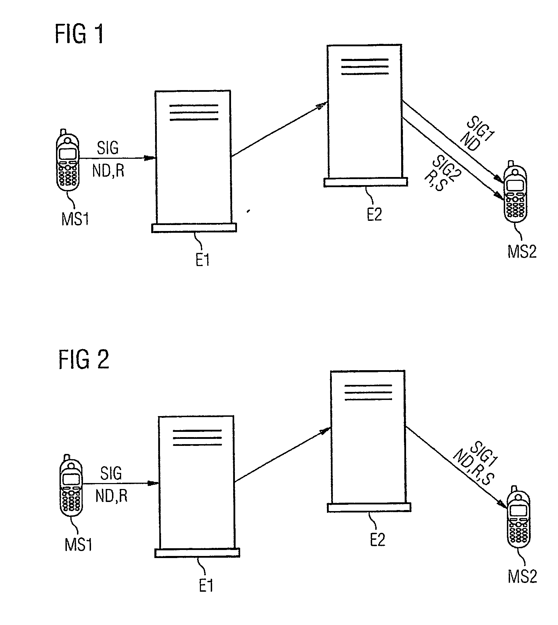

Figur 1 zeigt eine erste Mobilstation MS1, welche Bestandteil eines Mobilfunkkommunikationssystems ist. Von dieser ersten Mobilstation MS1 sollen Nutzdaten ND an eine zweite Mobilstation MS2, welche Bestandteil eines anderen Funkkommunikationssystems ist, gesendet werden. Das erfindungsgemäße Verfahren ist auch auf den Fall, welcher im folgenden nicht weiter betrachtet wird, anwendbar, dass die zweite Mobilstation MS2 Bestandteil desselben Mobilfunkkommunikationssystems wie die erste Mobilstation MS1 ist. Die Versendung der Nutzdaten ND soll unter Verwendung des Multimedia Message Service (MMS) als Medienobjekt erfolgen. MMS wird von den Organisationen 3GPP und von der Open Mobile Alliance (OMA) spezifiziert und ist in einer ersten Version bereits in den Mobilfunkmarkt eingeführt. MMS ermöglicht eine Vermittlung und Übertragung multimedialer Nachrichten, wie z.B. eine Kombination aus Bild- und Tondaten, zwischen Mobilstationen.

Die Nutzdaten ND sollen der zweiten Mobilstation MS2 jedoch unter Beachtung bestimmter Nutzungsrechte R der zweiten Mobilstation MS2 an den Nutzdaten ND zur Verfügung gestellt werden. Diese Nutzungsrechte R ermöglichen es der zweiten Mobilstation MS2 z.B., die Nutzdaten ND zwar abzuspielen und anzuzeigen, verhindern aber eine Weiterleitung oder Vervielfältigung der Nutzdaten ND. Um dies zu realisieren, kann ein DRM (Digital Rights Management) Verfahren angewandt werden. DRM ist in seiner ersten Ausprägung aktuell von der Open Mobile Alliance verabschiedet worden. DRM ermöglicht das Management expliziter Nutzungsrechte für digitale Inhalte beliebiger Natur, d.h. insbesondere auch für verschiedenartige multimediale Daten, welche mit MMS übertragen werden können.

Als Methode für das Rechtemanagement wurde von der OMA z.B. das Separate-Delivery-Verfahren definiert. Hierbei werden die Medienobjekte verschlüsselt in einen neu definierten Datentyp ("application/vnd.oma.drm.content") eingepackt, welcher zusätzlich Signalisierungsinformationen enthält. Durch die Verschlüsselung kann der Inhalt vor unautorisierter Benutzung geschützt werden, auch wenn er von einer Anwendung ohne spezifische DRM-Funktionalität gehandhabt und in einem frei zugänglichen Speicherbereich einer Mobilstation abgelegt wird. Zusätzlich wird über einen Kanal ein Rechteobjekt zum Empfänger übertragen. Es hat den Datentyp "application/vnd.oma.drm.rights+xml" in der textuellen Codierung und "application/vnd.oma.drm.rights+wbxml" in der binären Codierung. Das Rechteobjekt legt einerseits die Nutzungsrechte fest und enthält andererseits den Schlüssel zur Entschlüsselung des Medienobjekts im Container vom Typ "application/vnd.oma.drm.content".

Im folgenden wird die Versendung der Nutzdaten ND als Medienobjekt durch die erste Mobilstation MS1 beschrieben. Die Mobilstation MS1 integriert die zu schützenden Inhalte in Form der Nutzdaten ND und eine Beschreibung der damit zu verknüpfenden Nutzungsrechte R in eine MMS-Multimedianachricht. Die Nutzdaten ND sind nicht verschlüsselt. Damit wird eine Anpassung der Typen/Formate der Medienobjekte im Laufe der Weiterleitung zu der zweiten Mobilstation MS2 ermöglicht, wie dies in MMS vorgesehen ist. Die unverschlüsselte Versendung der Nutzdaten ND durch die erste Mobilstation MS1 hat den Vorteil, dass der Aufwand zur Erzeugung eines geeigneten Schlüssels und zur nachfolgenden Verschlüsselung der Nutzdaten ND für die erste Mobilstation MS1 nicht anfällt.

In Figur 1 erfolgt die Weiterleitung der Nutzdaten ND über eine erste Vermittlungseinrichtung E1 und eine zweite Vermittlungseinrichtung E2. Hierbei ist die erste Vermittlungseinrichtung E1 Bestandteil des Mobilfunkkommunikationssystems der ersten Mobilstation MS1, während die zweite Vermittlungseinrichtung E2 einen Bestandteil des Mobilfunkkommunikationssystems der zweiten Mobilstation MS2 darstellt. Zwischen der ersten Mobilstation MS1 und der ersten Vermittlungseinrichtung E1, sowie zwischen der ersten Vermittlungseinrichtung E1 und der zweiten Vermittlungseinrichtung E2, sowie zwischen der zweiten Vermittlungseinrichtung E2 und der zweiten Mobilstation MS2 können die Nutzdaten ND von weiteren Einrichtungen weitergleitet werden. Diese Weiterleitung kann über Funk oder leitungsgebunden erfolgen, sie ist für das Verständnis des erfindungsgemäßen Verfahrens nicht relevant.

Die erste Mobilstation MS1 hat die Information gespeichert, dass die erste Vermittlungseinrichtung E1 die Funktionalität "Separate-Delivery in MMS" oder auch andere geschützte Datenübertragungsverfahren unterstützt. Damit ist sichergestellt, dass der unverschlüsselte Inhalt in der MMS-Multimedianachricht nicht auf die gleiche Weise wie andere, nicht gemäß DRM geschützte Inhalte bis zur zweiten Mobilsta tion MS2 weitergeleitet wird und somit keinem DRM-Schutz unterliegt. Vielmehr sollen die Nutzdaten ND von der ersten Vermittlungseinrichtung E1 erfindungsgemäß verarbeitet werden.

Die erste Mobilstation MS1 sendet ein Signal SIG an die erste Vermittlungseinrichtung E1, welches die Nutzdaten ND und Informationen über die Nutzungsrechte R der zweiten Mobilstation MS2 an den Nutzdaten ND umfasst. Weiterhin zeigt das Signal SIG der ersten Vermittlungseinrichtung E1 an, dass die Nutzdaten ND bei der Weiterleitung an die zweite Mobilstation MS2 DRM-Schutz erhalten sollen. Dies entspricht einer Aufforderung der ersten Mobilstation MS1, die Nutzdaten unter Verwendung des Separate-Delivery-Verfahrens oder eines anderen geeigneten geschützten Verfahrens an die zweite Mobilstation MS2 zu übermitteln.

Die folgende Tabelle zeigt das Kopffeld für die von der Mobilstation MS1 an die erste Vermittlungseinrichtung E1 übermittelte MMS-Sendeanfrage unter Verwendung des Signals SIG.

| **Feldname** | **Beschreibung** |
|---|---|
| X-Mms- | Verpflichtend. |
| Message-Type | Bezeichnet den Typ der MMS PDU (Packet Data Unit). |
| X-Mms- | Verpflichtend. |
| Transaction-ID | Identifikationsnummer zur Identifikation der Sendeanfrage (Typ: M-Send-req.) und der korrespondierenden Bestätigung durch die erste Vermittlungseinrichtung E1 (Typ: M-send.conf). |
| X-Mms-MMS- | Verpflichtend. |
| Version | Die MMS Versionsnummer. |
| From | Optional. |
| | Adresse der ersten Mobilstation MS1. |
| Subject | Optional. |
| | Betreff der Multimedianachricht. |
| ... | ... |
| X-Mms-Rights- | Optional. |
| Expression | Identifikation des mit DRM-Schutz zu versehenden Objekts in Form der Nutzdaten ND und Information über die Nutzungsrechte R der zweiten Mobilstation MS2 an den Nutzdaten ND. |

Weitere Felder, durch das Feld mit den Punkten angedeutet, können Bestandteil des Kopffeldes des Signals SIG sein.

Die erfindungsgemäße Aufforderung der ersten Mobilstation MS1, die Nutzdaten ND unter Verwendung eines geschützten Datenübertragungsverfahrens zu übertragen, findet mittels des doppelt eingerahmten Feldes statt. So enthält das Kopffeld unter dem Feldnamen "X-Mms-Rights-Expression" eine Referenz in Form eines Textstrings auf das zu schützende Objekt in Form der Nutzdaten ND im Datenteil der MMS-Sendeanfrage. Durch diesen expliziten Bezug ist auch eine separate Behandlung mehrerer Objekte im Datenteil einer MMS-Sendeanfrage möglich, bei der z.B. einzelnen Objekten unterschiedliche Nutzungsrechte zugewiesen werden können.

Weiterhin enthält das Feld "X-Mms-Rights-Expression" Information über die Nutzungsrechte R der zweiten Mobilstation MS2 an den Nutzdaten ND in Form einer Rechtebeschreibung, die syntaktisch und semantisch dem Rechteobjekt des Typs "application/vnd.oma.drm-rights+wbxml" gemäß OMA Spezifikation [OMA-Download-DRMREL-vl_0] entspricht. Lediglich der Schlüssel für den Zugriff auf das zu schützende Objekt ist hier nicht erforderlich, da das Element nicht verschlüsselt ist. Diese Darstellung hat zwei Vorteile: erstens kann die bereits definierte, binäre Darstellung der Rechtebeschreibung genutzt werden und damit eine effiziente Codierung für die Darstellung des Rechteobjektes auf der Luftschnittstelle zwischen der ersten Mobilstation MS1 und ersten Vermittlungseinrichtung E1 genutzt werden und zweitens kann dieselbe Darstellung - ergänzt um den Schlüssel zur Entschlüsselung des dann verschlüsselten Objekts - auch auf dem Weg der Weiterleitung von der ersten Vermittlungseinrichtung E1 über die zweite Vermittlungseinrichtung E2 zur zweiten Mobilstation MS2 eingesetzt werden, was zu einer Reduktion des Arbeitsaufwands für die Vermittlungseinrichtungen E1 und E2 führt.

Das Kopffeld des Signals SIG von der ersten Mobilstation MS1 zur ersten Vermittlungseinrichtung E1 kann dann beispielhaft die nachfolgend dargestellte Form annehmen, wobei die Inhalte des Kopffeldes der Anschaulichkeit halber als Text dargestellt sind, während bei einer standardkonformen Übertragung hingegen binäre Codes verwendet werden:
X-Mms-Message-Type: m-send-req.
X-Mms-Transaction-ID: TRANSACTION-ID#1.
X-Mms-MMS-Version: 1.2.
From: nutzerA@operatorA.
Subject: ein DRM-geschütztes Objekt.

X-Mms-Rights-Expression: 102 ContentReferenz001 ... (84 binäre Oktette zur Darstellung der Rechtebeschreibung)

In diesem Beispiel wird lediglich eine Information über die Nutzungsrechte R für die Nutzdaten ND in die MMS Sendeanfrage eingebettet. Möglich sind aber auch mehrere Rechtebeschreibungen für mehrere Medienobjekte in der Multimedianachricht.

Das Feld "X-Mms-Rights-Expression" enthält zunächst eine Angabe für die Anzahl der noch folgenden Oktette, die zu dem Feld gehören, in diesem Fall 102, eine Referenz auf das zugehörige Objekt in Form der Nutzdaten ND im Datenteil der MMS-Sendeanfrage, in diesem Fall "ContentReferenz001", und die Information über die Nutzungsrechte R der zweiten Mobilstation MS2 als Rechtebeschreibung in binärer Form. Somit kann eine die MMS-Nachricht weiterleitende Einrichtung E1 oder E2 erkennen, dass ein Objekt innerhalb der MMS-Nachricht geschützt zu übertragen ist und die erforderlichen Maßnahmen ergreifen. Unter geschützter Übertragung werden hierbei zwei Möglichkeiten verstanden: dem Empfänger der MMS-Nachricht wird die MMS-Nachricht mit dem verschlüsselten Objekt in einer Nachricht übertragen, und der Schlüssel zu dem verschlüsselten Objekt zusammen mit der Rechtebeschreibung in einer anderen Nachricht; oder dem Empfänger wird die MMS-Nachricht mit dem verschlüsselten Objekt in einer Nachricht zusammen mit dem Schlüssel und der Rechtebeschreibung übertragen, wobei der Schlüssel wiederum mit einem für den Empfänger spezifischen Schlüssel verschlüsselt ist.

Je nach Ausgestaltung des Feldes "X-Mms-Rights-Expression" kann die Mobilstation MS1 zur Verwendung eines konkreten der beiden beschriebenen Verfahren zur gesicherten Datenübertragung auffordern, oder sie kann die Entscheidung zwischen den beiden Möglichkeiten der oder den weiterleitenden Einrichtungen überlassen.

Der Datenteil der MMS-Nachricht wird in dem Beispiel nicht näher dargestellt. Er enthält die Nutzdaten ND in unverschlüsselter Form und gegebenenfalls weitere Bestandteile der MMS-Nachricht, welche ohne Schutz durch ein DRM-Verfahren übertragen werden sollen.

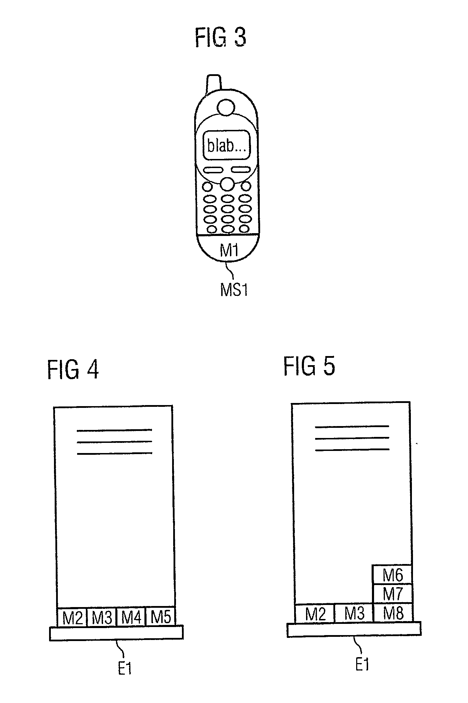

Figur 3 zeigt eine erfindungsgemäße Vorrichtung zur Übermittlung von Nutzdaten in Form der ersten Mobilstation MS1, welche Mittel M1 zur Erzeugung und zum Versenden über Funk des erfindungsgemäßen Signals SIG aufweist.

In Figur 1 empfängt die erste Vermittlungseinrichtung E1 das Signal SIG, verarbeitet die DRM-spezifische Signalisierung des Kopffeldes, extrahiert die Nutzdaten ND, die DRM-Schutz erhalten sollen, und speichert diese. Bei einer unverschlüsselten Weiterleitung der Nutzdaten ND durch die erste Vermittlungseinrichtung E1 besteht die Gefahr, dass in dem Fall, dass die zweite Vermittlungseinrichtung E2 nicht über die Funktionalität zum Aufbringen von DRM-Schutz auf die Nutzdaten ND verfügt, die aufgrund der Aufforderung der ersten Mobilstation MS1 geschützt zu übermittelnden Nutzdaten ND ungeschützt übermittelt werden würden.

Anstelle des entfernten Inhalts in Form der Nutzdaten ND integriert die erste Vermittlungseinrichtung E1 eine Referenz auf das Objekt in die von der ersten Mobilstation MS1 gesendete MMS-Nachricht z.B. in Form eines Uniform Resource Locators (URL), über den die zweite Vermittlungseinrichtung E2, wenn sie die DRM-spezifische Funktionalität und Signalisierung unterstützt, den Inhalt z.B. per HyperText Transfer Protocol (HTTP) laden kann. Diese Referenz entspricht somit einer Identifikationsinformation der von der ersten Vermittlungseinrichtung E1 gespeicherten Nutzdaten ND.

Die erste Vermittlungseinrichtung E1 stellt unter der von ihr weitergeleiteten URL, d.h. auf Aufforderung unter Bezugnahme auf die Identifikationsinformation der gespeicherten Nutzda ten ND, die Nutzdaten ND zur Verfügung. Dabei bestehen grundsätzlich die folgenden Optionen:
(A) Die Nutzdaten ND werden unverschlüsselt von der ersten Vermittlungseinrichtung E1 zur Verfügung gestellt. Die zweite Vermittlungseinrichtung E2 lädt die Nutzdaten ND, passt eventuell Format und Typ der Nutzdaten ND an, verschlüsselt sie und integriert sie in eine MMS-Nachricht, welche an die zweite Mobilstation MS2 übermittelt wird. Ein Vorteil dieser Option besteht darin, dass die Eigenschaften des empfangenden Endgerätes, d.h. der zweiten Mobilstation MS2, nicht zur ersten Vermittlungseinrichtung E1 kommuniziert werden müssen. Die Eigenschaften des empfangenden Endgerätes betreffen z.B. die Fähigkeit des betreffenden Endgerätes Bildcodecs, Audiocodecs und andere Datenformate darzustellen. Nachteilig an dieser Option hingegen ist die eventuell missbräuchlich verwendbare Abrufmöglichkeit der Nutzdaten ND in unverschlüsseltem Zustand.
(B) Die Nutzdaten ND werden verschlüsselt weitergeleitet. Die zweite Vermittlungseinrichtung E2 ruft die Nutzdaten ND von der ersten Vermittlungseinrichtung E1 unter Bezugnahme auf die Referenz ab. In die Anforderung nach Übermittlung der Nutzdaten ND sind die Eigenschaften des empfangenden Endgerätes, d.h. der zweiten Mobilstation MS2, integriert. An diese Eigenschaften werden die Nutzdaten ND von der ersten Vermittlungseinrichtung E1 vor der Übermittlung an die zweite Vermittlungseinrichtung E2 angepasst. Es folgt die Verschlüsselung der gegebenenfalls angepassten Nutzdaten ND und die Weiterleitung an die zweite Vermittlungseinrichtung E2. Zusätzlich wird auch der dazugehörige Schlüssel von der ersten Vermittlungseinrichtung E1 an die zweite Vermittlungseinrichtung E2 übermittelt. Vorteilhaft an dieser Option ist, dass die Nutzdaten ND die erste Vermittlungseinrichtung E1 ausschließlich in verschlüsseltem Zustand verlassen, also vor unautorisier ter Nutzung geschützt sind. Nachteilig ist der erhöhte Aufwand, welcher dadurch entsteht, dass die Eigenschaften des empfangenden Endgeräts von der zweiten Vermittlungseinrichtung E2 zu der ersten Vermittlungseinrichtung E1 kommuniziert werden müssen.

Nach der Extraktion und Speicherung der Nutzdaten ND übermittelt die erste Vermittlungseinrichtung E1 die MMS-Nachricht an die zweite Vermittlungseinrichtung E2 mit den stellvertretend für die zu schützenden Inhalte integrierten Referenzen.

Figur 4 zeigt eine erfindungsgemäße Vorrichtung E1 zum Weiterleiten von Nutzdaten mit Mitteln M2 zum Empfangen eines erfindungsgemäßen Signals von einer Teilnehmerstation, sowie Mitteln M3 zur Verarbeitung einer Aufforderung der Teilnehmerstation zur Übermittlung von Nutzdaten mittels DRM-Schutz, sowie mit Mitteln M4 zum Speichern der von seitens der Teilnehmerstation unverschlüsselt übermittelten Nutzdaten und mit Mitteln M5 zum Weiterleiten von gegebenenfalls weiteren Bestandteilen des von seitens der Teilnehmerstation empfangenen Signals und von Identifikationsinformation der gespeicherten Nutzdaten.

Falls die zweite Vermittlungseinrichtung E2 die DRM-spezifische Funktionalität zur Erfüllung der Aufforderung der ersten Mobilstation MS1 nach einer Übermittlung der Nutzdaten mit dem beschriebenen geschützten Übertragungsverfahren unterstützt, wird die MMS-Nachricht mit den Referenzen für die Nutzdaten ND zur zweiten Vermittlungseinrichtung E2 weitergeleitet. Diese reagiert entsprechend der Aufforderung der ersten Mobilstation MS1 und fordert die Nutzdaten ND gemäß einer der oben beschriebenen Optionen (A) oder (B) von der ersten Vermittlungseinrichtung E1 an. Die Nutzdaten sind entweder gemäß Option (B) bereits adaptiert und verschlüsselt oder werden gemäß Option (A) nach der Übermittlung zur zweiten Vermittlungseinrichtung E2 von dieser an die Eigenschaften der zweiten Mobilstation MS2 adaptiert und verschlüsselt.

Es wird durch die zweite Vermittlungseinrichtung E2 eine geeignete Rechtebeschreibung aus dem Schlüssel S und den Nutzungsrechten R generiert bzw. in eine bereits vorhandene Rechtebeschreibung mit den Nutzungsrechten R der zu den verschlüsselten Nutzdaten ND passende Schlüssel S integriert. Weiterhin wird die MMS-Nachricht von der zweiten Vermittlungseinrichtung E2 mit den verschlüsselten Nutzdaten ND unter Verwendung einer ersten Nachricht SIG1 an die zweite Mobilstation MS2 übermittelt. Auch werden die Rechteobjekte, d.h. der passende Schlüssel S und Information über die Nutzungsrechte R der zweiten Mobilstation MS2 an den Nutzdaten ND, unter Verwendung einer zweiten Nachricht SIG2 übermittelt. Für die Art der Übermittlung der zweiten Nachricht SIG2 existieren verschiedene Optionen:
(I) Jedes Rechteobjekt wird separat per WAP Push, und damit unabhängig von der Verwendung von MMS, übermittelt. Dies hat insbesondere bei Übermittlung einer Mehrzahl von geschützt weiterzuleitenden Objekten den Nachteil einer zeitlich nicht abgestimmten Zustellung des verschlüsselten Inhalts und des Rechteobjekts.
(II) Das Rechteobjekt wird in die MMS-Empfängerbenachrichtigung integriert und damit der zweiten Mobilstation MS2 bereits vor der eigentlichen MMS-Nachricht zugestellt.

Die zweite Mobilstation MS2 empfängt die MMS-Nachricht mit den verschlüsselten, DRM-geschützen Inhalten, in Form der Nachricht SIG1, erkennt diesen Umstand an den Inhalts-Typen der Objekte und empfängt zusätzlich gemäß einer der oben beschriebenen Optionen (I) oder (II) das entsprechende Rechteobjekt, d.h. die Nachricht SIG2. Mit der erforderlichen funktionalen Ausstattung, gemäß OMA der "DRM User Agent", werden die verschlüsselten Nutzdaten ND an die entsprechende Anwendung der zweiten Mobilstation MS2 geleitet. Die Anwendung ermittelt die zugehörige Rechtebeschreibung, kontrolliert gemäß den enthaltenen Nutzungsrechten R, ob dem Nutzer das Recht zur Nutzung der Nutzdaten ND gewährt wird, entnimmt der Rechtebeschreibung den Schlüssel S zur Entschlüsselung der Nutzdaten ND, führt die Entschlüsselung durch und gibt die unverschlüsselten Nutzdaten ND zur Nutzung an die entsprechende Anwendung weiter.

In Figur 2 ist der Fall dargestellt, dass das Signal SIG1 an die zweite Mobilstation MS2 sowohl die verschlüsselten Nutzdaten ND, als auch den Schlüssel S zu den verschlüsselten Nutzdaten ND, als auch die Nutzungsrechte R enthält. In diesem Fall ist der Schlüssel S jedoch nicht unverschlüsselt. Vielmehr wurde der Schlüssel S entweder von der ersten oder von der zweiten Vermittlungseinrichtung E1 oder E2 mit einem öffentlichen Schlüssel der zweiten Mobilstation MS2 verschlüsselt. Vor dieser Verschlüsselung kann zusätzlich eine Authentifizierung der zweiten Mobilstation MS2 durch eine Überprüfung ihrer Zertifikate durchgeführt werden. Somit kann sichergestellt werden, dass die zweite Mobilstation MS2 DRM unterstützt. Die zweite Mobilstation MS2 verwendet ihren privaten Schlüssel zur Entschlüsselung der Schlüssels, welchen sie dann zur Entschlüsselung der Nutzdaten ND verwendet.

Falls die zweite Vermittlungseinrichtung E2 die DRM-spezifische Funktionalität nicht unterstützt, kann die MMS-Nachricht mit den Referenzen durch eine Weiterleitung durch die zweite Vermittlungseinrichtung E2 an die zweite Mobilstation MS2 übermittelt werden, ohne dass die zweite Vermittlungseinrichtung E2 eine Bearbeitung der MMS-Nachricht vornimmt. Anhand des Formats der MMS-Nachricht erkennt die zweite Vermittlungseinrichtung E2 in diesem Fall, dass sie keine Bearbeitung der MMS-Nachricht durchführen soll bzw. kann.

Ein Zugriff auf die in der ersten Vermittlungseinrichtung E1 gespeicherten Inhalte in Form der Nutzdaten ND durch die zweite Mobilstation MS2 kann anhand ihrer Adresse von der ersten Vermittlungseinrichtung E1 detektiert und abgewiesen werden, was besonders im Fall der Option (A) sinnvoll ist. Im Fall der Option (B) kann die erste Vermittlungseinrichtung E1 auch als Content Server operieren und die Nutzdaten ND per OMA Content Download oder HTTP zustellen, was der Übermittlung der Nachricht SIG1 der Figur 1 an die zweite Mobilstation MS2 entspricht. Dies ist praktisch mit einer Funktionserweiterung der ersten Vermittlungseinrichtung E1 gleichzusetzen, welche es somit einem Absender erlaubt, seine Inhalte per Content Download anzubieten. Hierbei sollte allerdings die erste Vermittlungseinrichtung E1 eine Möglichkeit haben, dem empfangenden Endgerät eine Rechtebeschreibung per WAP-Push zuzustellen, wie es für den Fall Separate-Delivery in OMA DRM spezifiziert ist. Dies entspricht dann der Übermittlung der Nachricht SIG2. Die erste Vermittlungseinrichtung E1 benötigt hierzu Zugriff auf das so genannte Push Proxy Gateway, das die Push-Nachrichten zum Endgerät zustellen kann, welcher nicht unter allen Umständen möglich ist.

Als weitere Alternative zu den oben beschriebenen Optionen (A) und (B), bei denen die erste Vermittlungseinrichtung E1 die Nutzdaten ND aus dem Signal SIG entfernt und durch eine Referenz ersetzt, ist es möglich, dass die erste Vermittlungseinrichtung E1 die Nutzdaten ND zunächst extrahiert, verschlüsselt und anschließend in verschlüsselter Form erneut in die MMS-Nachricht integriert. Diese MMS-Nachricht wird über die zweite Vermittlungseinrichtung E2 an die zweite Mobilstation MS2 übermittelt. Die zugehörigen Rechteobjekte, d.h. der passende Schlüssel und die Nutzungsrechte R, werden von der ersten Vermittlungseinrichtung E1 zum Abruf auf Anforderung unter Bezugnahme auf eine Identifikationsinformation der Rechteobjekte bereitgestellt. Die entsprechenden Referenzen auf diese Rechteobjekte werden in die Container der verschlüsselten Nutzdaten ND integriert.

Diese Alternative ist besonders flexibel, weil sie sowohl anwendbar ist, wenn die zweite Vermittlungseinrichtung E2 DRM unterstützt, als auch, wenn dies nicht gegeben ist. Im ersten Fall kann die zweite Vermittlungseinrichtung E2 die zu einem verschlüsselten Objekt gehörige Rechtebeschreibung über die Referenz herunterladen, das Objekt entschlüsseln, es gegebenenfalls verändern und damit an die Eigenschaften der zweiten Mobilstation MS2 anpassen, neu verschlüsseln, und dem empfangenden Terminal, d.h. der zweiten Mobilstation MS2, unter Verwendung der Nachricht SIG2, wie in Figur 1 dargestellt, oder auch der Nachricht SIG1, wie in Figur 2 dargestellt, übermitteln. Weiterhin kann die zweite Vermittlungseinrichtung E2 ein neues, zugehöriges Rechteobjekt der zweiten Mobilstation MS2 zum Herunterladen anbieten oder gemäß den oben beschriebenen Optionen (I) oder (II) dem empfangenden Endgerät unter Verwendung einer Nachricht SIG2 übermitteln.

Ist die zweite Vermittlungseinrichtung E2 hingegen nicht in der Lage, DRM-geschützte Inhalte zu verarbeiten und anzupassen, kann sie diese auch unverändert an die zweite Mobilstation MS2 übermitteln. Falls die zweite Mobilstation MS2 dann DRM unterstützt, kann sie über die von der ersten Vermittlungseinrichtung E1 in die weitergeleitete MMS-Nachricht integrierte Referenz auf das von der ersten Vermittlungseinrichtung E1 angebotene Rechteobjekt zugreifen. Eine Nutzung der DRM-geschützten Inhalte ist somit möglich, ohne dass die zweite Vermittlungseinrichtung E2 davon berührt ist. Nachteilig ist allerdings, dass bei der zuletzt beschriebenen Variante keine Anpassung eines DRM-geschützten Objekts bezüglich Typ/Format und weiterer Eigenschaften durch die zweite Vermittlungseinrichtung E2 möglich ist, da diese auf den verschlüsselten Inhalt keinen Zugriff hat.

Figur 5 zeigt eine erfindungsgemäße Vorrichtung E1 zum Weiterleiten von Nutzdaten mit Mitteln M2 zum Empfangen eines erfindungsgemäßen Signals von einer Teilnehmerstation, sowie Mitteln M3 zur Verarbeitung einer Aufforderung der Teilnehmerstation zur Übermittlung von Nutzdaten mittels des Separate-Delivery-Verfahrens oder eines anderen Verfahrens zur geschützten Datenübertragung, sowie mit Mitteln M6 zum Ver schlüsseln der unverschlüsselten Nutzdaten, mit Mitteln M7 zum Speichern des Schlüssels zu den verschlüsselten Nutzdaten und mit Mitteln M8 zum Weiterleiten der verschlüsselten Nutzdaten, von Identifikationsinformation des Schlüssels und gegebenenfalls von weiteren Bestandteilen des von seitens der ersten Teilnehmerstation empfangenen Signals.

Vorteilhaft bei dem beschriebenen Verfahren ist insbesondere, dass im Falle, dass weder die zweite Vermittlungseinrichtung E2, noch die zweite Mobilstation MS2 DRM unterstützen, die Nutzdaten ND nicht ungeschützt zu der zweiten Mobilstation MS2 gelangen können. Dies beruht darauf, dass ein Anfordern sowohl der verschlüsselten Nutzdaten als auch des Rechteobjektes von der ersten Vermittlungseinrichtung E1 nur durch eine Einrichtung oder Teilnehmerstation erfolgen kann, welche DRM unterstützt.

## Patentansprüche

1. Verfahren zur Übermittlung von Nutzdaten (ND) von einer ersten Teilnehmerstation (MS1) über eine oder mehrere die Nutzdaten (ND) weiterleitende Einrichtungen (E1, E2) zu einer zweiten Teilnehmerstation (MS2),
**dadurch gekennzeichnet,**
**dass** von der ersten Teilnehmerstation (MS1) ein Signal (SIG) per Funk versendet wird, umfassend
- die unverschlüsselten Nutzdaten (ND),
- Informationen über Nutzungsrechte (R) der zweiten Teilnehmerstation (MS2) an den Nutzdaten (ND),
- eine Aufforderung an eine oder mehrere der weiterleitenden Einrichtungen (E1, E2), die Nutzdaten (ND) derart weiterzuleiten,
- **dass** der zweiten Teilnehmerstation (MS2) durch mindestens eine erste Nachricht (SIG1) die Nutzdaten (ND) verschlüsselt übermittelt werden, und
- entweder durch eine zweite Nachricht (SIG2) der Schlüssel (S) zu den verschlüsselten Nutzdaten (ND) und Informationen über die Nutzungsrechte (R) der zweiten Teilnehmerstation (MS2) an den Nutzdaten (ND) übermittelt werden
- oder durch die mindestens eine erste Nachricht (SIG1) der Schlüssel (S) zu den verschlüsselten Nutzdaten (ND) teilnehmerstationsspezifisch verschlüsselt und Informationen über die Nutzungsrechte (R) der zweiten Teilnehmerstation (MS2) an den Nutzdaten (ND) übermittelt werden.

2. Verfahren nach Anspruch 1, **dadurch gekennzeichnet,**
**dass** auf die Aufforderung der ersten Teilnehmerstation (MS1) hin eine erste die Nutzdaten (ND) weiterleitende Einrichtung (E1)
- die von der ersten Teilnehmerstation (MS1) unverschlüsselt gesendeten Nutzdaten (ND) speichert und
- Identifikationsinformation der gespeicherten Nutzdaten (ND) weiterleitet.

3. Verfahren nach Anspruch 2, **dadurch gekennzeichnet,**
**dass** die erste die Nutzdaten (ND) weiterleitende Einrichtung (E1) die Nutzdaten (ND) auf eine Anforderung, welche die Identifikationsinformation der gespeicherten Nutzdaten (ND) enthält, einer zweiten die Nutzdaten (ND) weiterleitenden Einrichtung (E2) unverschlüsselt übermittelt.

4. Verfahren nach Anspruch 3, **dadurch gekennzeichnet,**
**dass** die zweite die Nutzdaten (ND) weiterleitende Einrichtung (E2)
- die Nutzdaten (ND) verschlüsselt,
- die verschlüsselten Nutzdaten (ND) durch mindestens eine erste Nachricht (SIG1) an die zweite Teilnehmerstation (MS2) übermittelt, und
- entweder den Schlüssel (S) zu den verschlüsselten Nutzdaten (ND) und Informationen über die Nutzungsrechte (R) der zweiten Teilnehmerstation (MS2) an den Nutzdaten (ND) durch eine zweite Nachricht (SIG2) an die zweite Teilnehmerstation (MS2) übermittelt
- oder den Schlüssel (S) zu den verschlüsselten Nutzdaten (ND) teilnehmerstationsspezifisch verschlüsselt und Informationen über die Nutzungsrechte (R) der zweiten Teilnehmerstation (MS2) an den Nutzdaten (ND) durch die mindestens eine erste Nachricht (SIG1) an die zweite Teilnehmerstation (MS2) übermittelt.

5. Verfahren nach Anspruch 2, **dadurch gekennzeichnet,**
**dass** die erste die Nutzdaten (ND) weiterleitende Einrichtung (E1) auf eine Anforderung, welche die Identifikationsinformation der gespeicherten Nutzdaten (ND) enthält, einer zweiten die Nutzdaten (ND) weiterleitenden Einrichtung (E2)
- die Nutzdaten (ND) verschlüsselt und
- die verschlüsselten Nutzdaten (ND) und den Schlüssel zu den verschlüsselten Nutzdaten (ND) der zweiten die Nutzdaten (ND) weiterleitenden Einrichtung (E2) übermittelt.

6. Verfahren nach Anspruch 5, **dadurch gekennzeichnet,**
**dass** die zweite die Nutzdaten (ND) weiterleitende Einrichtung (E2)
- die verschlüsselten Nutzdaten (ND) durch mindestens eine erste Nachricht (SIG1) an die zweite Teilnehmerstation (MS2) übermittelt, und
- entweder den Schlüssel (S) zu den verschlüsselten Nutzdaten (ND) und Informationen über die Nutzungsrechte (R) der zweiten Teilnehmerstation (MS2) an den Nutzdaten (ND) durch eine zweite Nachricht (SIG2) an die zweite Teilnehmerstation (MS2) übermittelt
- oder den Schlüssel (S) zu den verschlüsselten Nutzdaten (ND) teilnehmerstationsspezifisch verschlüsselt und Informationen über die Nutzungsrechte (R) der zweiten Teilnehmerstation (MS2) an den Nutzdaten (ND) durch die mindestens eine erste Nachricht (SIG1) an die zweite Teilnehmerstation (MS2) übermittelt.

7. Verfahren nach Anspruch 2, **dadurch gekennzeichnet,**
**dass** die erste die Nutzdaten (ND) weiterleitende Einrichtung (E1) auf eine Anforderung, welche die Identifikationsinformation der gespeicherten Nutzdaten (ND) enthält, der zweiten Teilnehmerstation (MS2)
- die verschlüsselten Nutzdaten (ND) durch mindestens eine erste Nachricht (SIG1) an die zweite Teilnehmerstation (MS2) übermittelt, und
- entweder den Schlüssel (S) zu den verschlüsselten Nutzdaten (ND) und Informationen über die Nutzungsrechte (R) der zweiten Teilnehmerstation (MS2) an den Nutzdaten (ND) durch eine zweite Nachricht (SIG2) an die zweite Teilnehmerstation (MS2) übermittelt
- oder den Schlüssel (S) zu den verschlüsselten Nutzdaten (ND) teilnehmerstationsspezifisch verschlüsselt und Informationen über die Nutzungsrechte (R) der zweiten Teilnehmerstation (MS2) an den Nutzdaten (ND) durch die mindestens eine erste Nachricht (SIG1) an die zweite Teilnehmerstation (MS2) übermittelt.

8. Verfahren nach Anspruch 1, **dadurch gekennzeichnet,**
**dass** auf die Aufforderung der ersten Teilnehmerstation (MS1) hin eine erste die Nutzdaten (ND) weiterleitende Einrichtung (E1)
- die von der ersten Teilnehmerstation (MS1) unverschlüsselt gesendeten Nutzdaten (ND) verschlüsselt,
- die verschlüsselten Nutzdaten (ND) weiterleitet,
- den Schlüssel zu den verschlüsselten Nutzdaten (ND) speichert und
- Identifikationsinformation des gespeicherten Schlüssels weiterleitet.

9. Verfahren nach Anspruch 8, **dadurch gekennzeichnet,**
**dass** die erste die Nutzdaten (ND) weiterleitende Einrichtung (E1) auf eine Anforderung, welche die Identifikationsinformation des gespeicherten Schlüssels enthält, einer zweiten die Nutzdaten (ND) weiterleitende Einrichtung (E2) den Schlüssel zu den verschlüsselten Nutzdaten (ND) übermittelt.

10. Verfahren nach Anspruch 9, **dadurch gekennzeichnet,**
**dass** die zweite die Nutzdaten (ND) weiterleitende Einrichtung (E2)
- die verschlüsselten Nutzdaten (ND) durch mindestens eine erste Nachricht (SIG1) an die zweite Teilnehmerstation (MS2) übermittelt, und
- entweder den Schlüssel (S) zu den verschlüsselten Nutzdaten (ND) und Informationen über die Nutzungsrechte (R) der zweiten Teilnehmerstation (MS2) an den Nutzdaten (ND) durch eine zweite Nachricht (SIG2) an die zweite Teilnehmerstation (MS2) übermittelt
- oder den Schlüssel (S) zu den verschlüsselten Nutzdaten (ND) teilnehmerstationsspezifisch verschlüsselt und Informationen über die Nutzungsrechte (R) der zweiten Teilnehmerstation (MS2) an den Nutzdaten (ND) durch die mindestens eine erste Nachricht (SIG1) an die zweite Teilnehmerstation (MS2) übermittelt.

11. Verfahren nach Anspruch 9, **dadurch gekennzeichnet,**
**dass** die zweite die Nutzdaten (ND) weiterleitende Einrichtung (E2)
- die verschlüsselten Nutzdaten (ND) entschlüsselt und erneut verschlüsselt,
- die erneut verschlüsselten Nutzdaten (ND) durch mindestens eine erste Nachricht (SIG1) an die zweite Teilnehmerstation (MS2) übermittelt, und
- entweder den Schlüssel (S) zu den verschlüsselten Nutzdaten (ND) und Informationen über die Nutzungsrechte (R) der zweiten Teilnehmerstation (MS2) an den Nutzdaten (ND) durch eine zweite Nachricht (SIG2) an die zweite Teilnehmerstation (MS2) übermittelt
- oder den Schlüssel (S) zu den verschlüsselten Nutzdaten (ND) teilnehmerstationsspezifisch verschlüsselt und Informationen über die Nutzungsrechte (R) der zweiten Teilnehmerstation (MS2) an den Nutzdaten (ND) durch die mindestens eine erste Nachricht (SIG1) an die zweite Teilnehmerstation (MS2) übermittelt.

12. Verfahren nach Anspruch 8, **dadurch gekennzeichnet,**
**dass** die erste die Nutzdaten (ND) weiterleitende Einrichtung (E1) auf eine Anforderung, welche die Identifikationsinformation des gespeicherten Schlüssels enthält, der zweiten Teilnehmerstation (MS2) den Schlüssel (S) zu den verschlüsselten Nutzdaten (ND) und Informationen über die Nutzungsrechte (R) der zweiten Teilnehmerstation (MS2) übermittelt.

13. Vorrichtung (MS1) zur Übermittlung von Nutzdaten (ND) über eine oder mehrere die Nutzdaten (ND) weiterleitende Einrichtungen (E1, E2) zu einer Teilnehmerstation (MS2), **gekennzeichnet durch**
Mittel (M1) zum Erzeugen und Versenden eines Signals (SIG) über Funk, wobei das Signal (SIG) umfasst:
- die unverschlüsselten Nutzdaten (ND),
- Informationen über Nutzungsrechte (R) der Teilnehmerstation (MS2) an den Nutzdaten (ND),
- eine Aufforderung an eine oder mehrere der weiterleitenden Einrichtungen (E1, E2), die Nutzdaten (ND) derart weiterzuleiten,
- dass der Teilnehmerstation (MS2) **durch** mindestens eine erste Nachricht (SIG1) die Nutzdaten (ND) verschlüsselt übermittelt werden, und
- entweder **durch** eine zweite Nachricht (SIG2) der Schlüssel (S) zu den verschlüsselten Nutzdaten (ND) und Informationen über die Nutzungsrechte (R) der Teilnehmerstation (MS2) an den Nutzdaten (ND) übermittelt werden
- oder **durch** die mindestens eine erste Nachricht (SIG1) der Schlüssel (S) zu den verschlüsselten Nutzdaten (ND) teilnehmerstationsspezifisch verschlüsselt und Informationen über die Nutzungsrechte (R) der Teilnehmerstation (MS2) an den Nutzdaten (ND) übermittelt werden.

14. Vorrichtung (E1) zum Weiterleiten von Identifikationsinformation von Nutz-Daten, welche von einer ersten Teilnehmerstation (MS1) gegebenenfalls über weitere, Nutzdaten (ND) weiterleitenden, Einrichtungen (E2) zu einer zweiten Teilnehmerstation (MS2) übermittelt werden,
■ mit Mitteln (M2) zum Empfangen eines Signals (SIG) von seitens der ersten Teilnehmerstation (MS1), umfassend
- die unverschlüsselten Nutzdaten (ND) ,
- Informationen über Nutzungsrechte (R) der zweiten Teilnehmerstation (MS2) an den Nutzdaten (ND), ■ eine Aufforderung an eine oder mehrere der weiterleitenden Einrichtungen (E1, E2), die Nutzdaten (ND) derart weiterzuleiten,
• dass der zweiten Teilnehmerstation (MS2) durch mindestens eine erste Nachricht (SIG1) die Nutzdaten (ND) verschlüsselt übermittelt werden, und
• entweder durch eine zweite Nachricht (SIG2) der Schlüssel (S) zu den verschlüsselten Nutzdaten (ND) und Informationen über die Nutzungsrechte (R) der zweiten Teilnehmerstation (MS2) an den Nutzdaten (ND) übermittelt werden
• oder durch die mindestens eine erste Nachricht (SIG1) der Schlüssel (S) zu den verschlüsselten Nutzdaten (ND) teilnehmerstationsspezifisch verschlüsselt und Informationen über die Nutzungsrechte (R) der zweiten Teilnehmerstation (MS2) an den Nutzdaten (ND) übermittelt werden,
■ mit Mitteln (M3) zur Verarbeitung der Aufforderung der ersten Teilnehmerstation (MS1) ,
■ mit Mitteln (M4) zum Speichern der unverschlüsselten Nutzdaten (ND) und
■ mit Mitteln (M5) zum Weiterleiten von Identifikationsinformation der gespeicherten Nutzdaten (ND) .

15. Vorrichtung (E1) zum Weiterleiten von Nutzdaten (ND) , welche von einer ersten Teilnehmerstation (MS1) gegebenenfalls über weitere die Nutzdaten (ND) weiterleitende Einrichtungen (E2) zu einer zweiten Teilnehmerstation (MS2) übermittelt werden,
**gekennzeichnet durch**
■ Mittel (M2) zum Empfangen eines Signals (SIG) von seitens der ersten Teilnehmerstation (MS1), umfassend
- die unverschlüsselten Nutzdaten (ND),
- Informationen über Nutzungsrechte (R) der zweiten Teilnehmerstation (MS2) an den Nutzdaten (ND),
- eine Aufforderung an eine oder mehrere der weiterleitenden Einrichtungen (E1, E2), die Nutzdaten (ND) derart weiterzuleiten,
• dass der zweiten Teilnehmerstation (MS2) **durch** mindestens eine erste Nachricht (SIG1) die Nutzdaten (ND) verschlüsselt übermittelt werden, und
• entweder **durch** eine zweite Nachricht (SIG2) der Schlüssel (S) zu den verschlüsselten Nutzdaten (ND) und Informationen über die Nutzungsrechte (R) der zweiten Teilnehmerstation (MS2) an den Nutzdaten (ND) übermittelt werden
• oder **durch** die mindestens eine erste Nachricht (SIG1) der Schlüssel (S) zu den verschlüsselten Nutzdaten (ND) teilnehmerstationsspezifisch verschlüsselt und Informationen über die Nut zungsrechte (R) der zweiten Teilnehmerstation (MS2) an den Nutzdaten (ND) übermittelt werden,
■ Mittel (M3) zur Verarbeitung der Aufforderung der ersten Teilnehmerstation (MS1),
■ Mittel (M6) zum Verschlüsseln der unverschlüsselten Nutzdaten (ND) und
■ Mittel (M7) zum Speichern des Schlüssels zu den verschlüsselten Nutzdaten (ND) und
■ Mittel (M8) zum Weiterleiten der verschlüsselten Nutzdaten (ND) und von Identifikationsinformation des Schlüssels.

## Claims

1. Method for transmission of user data (ND) from a first mobile user station (MS1), via one or more devices (E1, E2) forwarding the user data (ND), to a second mobile user station (MS2),
**characterised in that,**
a signal (SIG) is sent by radio from the first mobile station (MS1), comprising
- the unencrypted user data (ND),
- information about usage rights (R) of the second mobile station (MS2) to the user data (ND),
- a request to one or more of the forwarding devices (E1, E2), to forward the user data (ND) such that,
- the user data (ND) is transmitted encrypted to the second user station (MS2) by at least one first message (SIG1), and
- the key (S) to the encrypted user data (ND) and information about the usage rights (R) of the second mobile station (MS2) to the user data (ND) are either transmitted by a second message (SIG2)
- or the key (S) to the encrypted user data (ND) encrypted for the specific user and information about the usage rights (R) of the second mobile station (MS2) to the user data (ND) is transmitted by the at least one first message (SIG1).

2. Method according to claim 1, **characterised in that**,
at the request of the first mobile station (MS1) a first device (E1) forwarding the user data (ND)
- stores the user data (ND) sent unencrypted by the first mobile station (MS1) and
- forwards identification information of the stored user data (ND) .

3. Method according to claim 2, **characterised in that,**
the first device (E1) forwarding the user data (ND) in response to a request which contains the identification information of the stored user data (ND), transmits the user data (ND) unencrypted to a second device (E2) forwarding the user data (ND).

4. Method according to claim 3, **characterised in that** the second device (E2) forwarding the user data (ND)
- encrypts the user data (ND),
- transmits the encrypted user data (ND) by at least one first message (SIG1) to the second mobile station (MS2), and
- either transmits the key (S) to the encrypted user data (ND) and information about the usage rights (R) of the second mobile station (MS2) to the user data (ND) by a second message (SIG2) to the second mobile station (MS2)
- or transmits the key (S) to the encrypted user data (ND) encrypted for the specific user and information about the usage rights (R) of the second mobile station (MS2) to the user data (ND) by the at least one first message (SIG1) to the second mobile station (MS2).

5. Method according to claim 2, **characterised in that** the first device (E1) forwarding the user data (ND), in response to a request containing the identification information of the stored user data (ND), forwards the user data (ND)
- encrypted to a second device (E2) forwarding the user data (ND) and
- transmits the encrypted user data (ND) and the key to the encrypted user data (ND) to the second device (E2) forwarding the user data (ND).

6. Method according to claim 5, **characterised in that** the second device (E2) forwarding the user data (ND)
- transmits the encrypted user data (ND) by at least one first message (SIG1) to the second mobile station (MS2), and
- either transmits the key (S) to the encrypted user data (ND) and information about the usage rights (R) of the second mobile station (MS2) to the user data (ND) by a second message (SIG2) to the second mobile station (MS2)
- or transmits the key (S) to the encrypted user data (ND) encrypted for the specific user and information about the usage rights (R) of the second mobile station (MS2) to the user data (ND) by the at least one first message (SIG1) to the second mobile station (MS2).

7. Method according to claim 2, **characterised in that** the first device (E1) forwarding the user data (ND), in response to a request containing the identification information of the stored user data (ND), from the second mobile station (MS2)
- transmits the encrypted user data (ND) by at least one first message (SIG1) to the second mobile station (MS2), and
- transmits either the key (S) to the encrypted user data (ND) and information about the usage rights (R) of the second mobile station (MS2) to the user data (ND) by a second message (SIG2) to the second mobile station (MS2)
- or transmits the key (S) to the encrypted user data (ND) encrypted for the specific user and information about the usage rights (R) of the second mobile station (MS2) to the user data (ND) by the at least one first message (SIG1) to the second mobile station (MS2).

8. Method according to claim 1, **characterised in that** at the request of first mobile station (MS1) a first device (E1) forwarding the user data (ND)
- encrypts the user data (ND) transmitted unencrypted from the first mobile station (MS1),
- forwards the encrypted user data (ND),
- stores the key to the encrypted user data (ND) and
- forwards identification information of the stored key.

9. Method according to claim 8, **characterised in that** the first device (E1) forwarding the user data (ND), in response to a request containing the identification information of the stored key, transmits the key to the encrypted user data (ND) to a second device (E2) forwarding the user data (ND).

10. Method according to claim 9, **characterised in that,**
the second device (E2) forwarding the user data (ND)
- transmits the encrypted user data (ND) by at least one first message (SIG1) to the second mobile station (MS2), and
- either transmits the key (S) to the encrypted user data (ND) and information about the usage rights (R) of the second mobile station (MS2) to the user data (ND) by a second message (SIG2) to the second mobile station (MS2)
- or transmits the key (S) to the encrypted user data (ND) encrypted for the specific user and information about the usage rights (R) of the second mobile station (MS2) to the user data (ND) by the at least one first message (SIG1) to the second mobile station (MS2).

11. Method according to claim 9, **characterised in that** the second device (E2) forwarding the user data (ND)
- decrypts the encrypted user data (ND) and encrypts it again,
- transmits the newly encrypted user data (ND) by at least a first message (SIG1) to the second mobile station (MS2), and
- either transmits the key (S) to the encrypted user data (ND) and information about the usage rights (R) of the second mobile station (MS2) to the user data (ND) by a second message (SIG2) to the second mobile station (MS2)
- or transmits the key (S) to the encrypted user data (ND) encrypted for the specific user and information about the usage rights (R) of the second mobile station (MS2) to the user data (ND) by the at least one first message (SIG1) to the second mobile station (MS2).

12. Method according to claim 8, **characterised in that** the first device forwarding the user data (ND), in response to a request containing the identification information of the stored key, transmits to the second mobile station (MS2) the key (S) to the encrypted user data (ND) and information about the usage rights (R) of the second mobile station (MS2).

13. Device (MS1) for transmission of user data (ND) via one or more devices (E1, E2) forwarding the user data (ND) to a mobile station (MS2), **characterised by** means (M1) for creating and sending a signal (SIG) via radio, with the signal (SIG) comprising:
- the unencrypted user data (ND),
- information about usage rights (R) of the mobile station (MS2) to the user data (ND),
- a request to one or more of the forwarding devices (E1, E2) to forward the user data (ND) such that,
- the user data (ND) is transmitted encrypted to the user station (MS2) by at least one first message (SIG1), and
- the key (S) to the encrypted user data (ND) and information about the usage rights (R) of the second mobile station (MS2) to the user data (ND) are either transmitted by a second message (SIG2)
- or the key (S) to the encrypted user data (ND) is transmitted encrypted for the specific user and information about the usage rights (R) of the second mobile station (MS2) to the user data (ND) is transmitted by the at least one first message (SIG1).

14. Device (E1) for forwarding identification information of user data, which is transmitted from a first mobile station (MS1) to a second mobile station (MS2), where necessary via further devices (E2) forwarding user data (ND),
• with means (M2) for receiving a signal (SIG) from the first mobile station (MS1) side, comprising
- the unencrypted user data (ND),
- information about usage rights (R) of the second mobile station (MS2) to the user data (ND),
- a request to one or more of the forwarding devices (E1, E2) to forward the user data (ND) such that,
• the user data (ND) is transmitted unencrypted to the second mobile station (MS2) by at least one first message (SIG1), and
• the key (5) to the encrypted user data (ND) and information about the usage rights (R) of the second mobile station (MS2) to the user data (ND) are transmitted either by a second message (SIG2)
• or the key (S) to the encrypted user data (ND) encrypted for the specific user and information about the usage rights (R) of the second mobile station (MS2) to then user data (ND) are transmitted by the at least one first message (SIG1),
• with means (M3) for processing the request of the first mobile station (MS1),
• with means (M4) for storing the unencrypted user data (ND) and
• with means (M5) for forwarding identification information of the stored user data (ND).

15. Device (E1) for forwarding user data (ND), which is transmitted from a first mobile station (MS1) to a second mobile station (MS2) where necessary via further devices (E2) forwarding the user data (ND),
**characterised by**
• means (M2) for receiving a signal (SIG) from the first mobile station (MS1), side, comprising
- the unencrypted user data (ND),
- information about usage rights (R) of the second mobile station (MS2) to the user data (ND),
- a request to one or more of the forwarding devices (E1, E2) to forward the user data (ND) such that,
- the user data (ND) is transmitted encrypted to the second user station (MS2) by at least one first message (SIG1), and
- either the key (S) to the encrypted user data (ND) and information about the usage rights (R) of the second mobile station (MS2) to the user data (ND) are transmitted by a second message (SIG2)
• or the key (S) to the encrypted user data (ND) is transmitted encrypted for the specific user by the at least one first message (SIG1) and. information is transmitted about the usage rights (R) of the second mobile station (MS2) to the user data (ND),
• means (M3) for processing the request of the first mobile station (MS1),
• means (M6) for encrypting the unencrypted user data (ND) and
• means (M7) for storing the key to the encrypted user data (ND) and
• means (M8) for forwarding the encrypted user data (ND) and identification information of the key.

## Revendications

1. Procédé pour la transmission de données utiles (ND) d'une première station d'abonné (MS1) au moyen d'un ou de plusieurs équipements (E1, E2) transmettant les données utiles (ND) à une seconde station d'abonné (MS2),
**caractérisé en ce que**
la première station d'abonné (MS1) envoie un signal (SIG) par radio, comprenant
- les données utiles (ND) non codées,
- des informations relatives aux droits d'utilisation (R) de la seconde station d'abonné (MS2) sur les données utiles (ND),
- une invitation à transmettre les données utiles (ND) destinée à un ou plusieurs des équipements (E1, E2) transmetteurs de telle sorte que
- les données utiles (ND) sont transmises de façon codée à la seconde station d'abonné (MS2) par au moins un premier message (SIG1) et
- soit le code (S) pour les données utiles (ND) codées et des informations relatives aux droits d'utilisation (R) de la seconde station d'abonné (MS2) sur les données utiles (ND) sont transmis par un second message (SIG2)
- soit le code (S) pour les données utiles (ND) codées est codé de façon spécifique à la station d'abonné et des informations relatives aux droits d'utilisation (R) de la seconde station d'abonné (MS2) sur les données utiles (ND) sont transmis par le au moins un premier message (SIG1).

2. Procédé selon la revendication 1, **caractérisé en ce que,** sur l'invitation de la première station d'abonné (MS1), un premier équipement (E1) transmettant les données utiles (ND)
- mémorise les données utiles (ND) envoyées de façon non codée par la première station d'abonné (MS1) et
- transmet de l'information d'identification de données utiles (ND) stockées.

3. Procédé selon la revendication 2, **caractérisé en ce que** le premier équipement (E1) transmettant les données utiles (ND) transmet les données utiles (ND) de façon non codée sur une invitation, qui contient l'information d'identification des données utiles (ND) stockées, d' un second équipement (E2) transmettant les données utiles (ND).

4. Procédé selon la revendication 3, **caractérisé en ce que** le second équipement (E2) transmettant les données utiles (ND)
- code les données utiles (ND),
- transmet les données utiles (ND) codées par au moins un premier message (SIG1) à la seconde station d'abonné (MS2), et
- soit transmet le code (S) pour les données utiles (ND) codées et des informations relatives aux droits d'utilisation (R) de la seconde station d'abonné (MS2) sur les données utiles (ND) par un second message (SIG2) à la seconde station d'abonné (MS2)
- soit code le code (S) pour les données utiles (ND) codées de façon spécifique à la station d'abonné et transmet des informations relatives aux droits d'utilisation (R) de la seconde station d'abonné (MS2) sur les données utiles (ND) par la au moins un premier message (SIG1) à la seconde station d'abonné (MS2).

5. Procédé selon la revendication 2, **caractérisé en ce que** le premier équipement (E1) transmettant les données utiles (ND) code les données utiles (ND) suite à une invitation, qui contient l'information d'identification des données utiles (ND) stockées, d'un second équipement (E2) transmettant les données utiles (ND) et
- transmet les données utiles (ND) codées et le code pour les données utiles (ND) codées du second équipement (E2) transmettant les données utiles (ND).

6. Procédé selon la revendication 5, **caractérisé en ce que** le second équipement (E2) transmettant les données utiles (ND)
- transmet les données utiles (ND) codées par au moins un premier message (SIG1) à la seconde station d'abonné (MS2), et
- soit transmet le code (S) pour les données utiles (ND) codées et des informations relatives aux droits d'utilisation (R) de la seconde station d'abonné (MS2) sur les données utiles (ND) par un second message (SIG2) à la seconde station d'abonné (MS2)
- soit code le code (S) pour les données utiles (ND) codées de façon spécifique à la station d'abonné et transmet des informations relatives aux droits d'utilisation (R) de la seconde station d'abonné (MS2) sur les données utiles (ND) par le au moins un premier message (SIG1) à la seconde station d'abonné (MS2).

7. Procédé selon la revendication 2, **caractérisé en ce que** le premier équipement (E1) transmettant les données utiles (ND) transmet, suite à une invitation, qui contient l'information d'identification des données utiles (ND) stockées, de la seconde station d'abonné (MS2) les données utiles (ND) codées par au moins un premier message (SIG1) à la seconde station d'abonné (MS2), et
- soit transmet le code (S) pour les données utiles (ND) codées et des informations relatives aux droits d'utilisation (R) de la seconde station d'abonné (MS2) sur les données utiles (ND) par un second message (SIG2) à la seconde station d'abonné (MS2)
- soit code le code (S) pour les données utiles (ND) codées de façon spécifique à la station d'abonné et transmet des informations relatives aux droits d'utilisation (R) de la seconde station d'abonné (MS2) sur les données utiles (ND) par le au moins un premier message (SIG1) à la seconde station d'abonné (MS2).

8. Procédé selon la revendication 1, **caractérisé en ce que** suite à l'invitation de la première station d'abonné (MS1), un premier équipement (E1) transmettant les données utiles (ND)
- code les données utiles (ND) envoyées par la première station d'abonné (MS1) de façon non codée,
- transmet les données utiles (ND) codées,
- mémorise le code pour les données utiles (ND) codées et
- transmet de l'information d'identification du code mémorisé.

9. Procédé selon la revendication 8, **caractérisé en ce que** le premier équipement (E1) transmettant les donnés utiles (ND) transmet le code pour les données utiles (ND) codées suite à une demande, qui contient l'information d'identification du code mémorisé, d'un second équipement (E2) transmettant les données utiles (ND).

10. Procédé selon la revendication 9, **caractérisé en ce que** le second équipement (E2) transmettant les données utiles (ND)
- transmet les données utiles (ND) codées par au moins un premier message (SIG1) à la seconde station d'abonné (MS2), et
- soit transmet le code (S) pour les données utiles (ND) codées et des informations relatives aux droits d'utilisation (R) de la seconde station d'abonné (MS2) sur les données utiles (ND) par un second message (SIG2) à la seconde station d'abonné (MS2)
- soit code le code (S) pour les données utiles (ND) codées de façon spécifique à la station d'abonné et transmet des informations relatives aux droits d'utilisation (R) de la seconde station d'abonné (MS2) sur les données utiles (ND) par le au moins un second message (SIG1) à la seconde station d'abonné (MS2).

11. Procédé selon la revendication 9, **caractérisé en ce que** le second équipement (E2) transmettant les données utiles (ND)
- décode les données utiles (ND) codées et les code de nouveau,
- transmet les données utiles (ND) codées à nouveau par au moins un premier message (SIG1) à la seconde station d'abonné (MS2), et
- soit transmet le code (S) pour les données utiles (ND) codées et les informations relatives aux droits d'utilisation (R) de la seconde station d'abonné (MS2) sur les données utiles (ND) par un second message (SIG2) à la seconde station d'abonné (MS2)
- soit code le code (S) pour les données utiles (ND) codées de façon spécifique à la station d'abonné et transmet des informations relatives aux droits d'utilisation (R) de la seconde station d'abonné (MS2) sur les données utiles (ND) par le au moins un premier message (SIG1) à la seconde station d'abonné (MS2).

12. Procédé selon la revendication 8, **caractérisé en ce que** suite à une invitation, qui contient l'information d'identification du code mémorisé, de la seconde station d'abonné (MS2), le premier équipement (E1) transmettant les données utiles (ND) transmet le code (S) pour les données utiles (ND) codées et des informations relatives aux droits d'utilisation (R) de la seconde station d'abonné (MS2).

13. Dispositif (MS1) pour la transmission de données utiles (ND) au moyen d'un ou de plusieurs équipements (E1, E2) transmettant les données utiles (ND) à une station d'abonné (MS2),
**caractérisé par**
des moyens (M1) pour générer et envoyer un signal (SIG) par radio, le signal (SIG) comprenant :
- les données utiles (ND) non codées,
- des informations relatives aux droits d'utilisation (R) de la station d'abonné (MS2) sur les données utiles (ND),
- une invitation destinée à un ou plusieurs des équipements (E1, E2) de transmission pour transmettre les données utiles (ND) de telle sorte que
- les données utiles (ND) sont transmises de façon codée par au moins un premier message (SIG1) à la station d'abonné (MS2), et
- soit le code (S) pour les données utiles (ND) codées et des informations relatives aux droits d'utilisation (R) de la station d'abonné (MS2) sur les données utiles (ND) sont transmis par un second message (SIG2)
- soit le code (S) pour les données utiles (ND) codées est codé de façon spécifique à la station d'abonné et des informations relatives aux droits d'utilisation (R) de la station d'abonné (MS2) sur les données utiles (ND) sont transmis par le au moins un premier message (SIG1).

14. Dispositif (E1) pour transmettre de l'information d'identification de données utiles, qui sont transmises par une première station d'abonné (MS1), le cas échéant au moyen d'autres équipements (E2) transmettant des données utiles (ND), à une seconde station d'abonné (MS2),
■ avec des moyens (M2) pour la réception d'un signal (SIG) de la première station d'abonné (MS1), comprenant
- les données utiles (ND) non codées,
- des informations relatives aux droits d'utilisation (R) de la seconde station d'abonné (MS2) sur les données utiles (ND),
- une invitation à transmettre les données utiles (ND) à un ou plusieurs des équipements (E1, E2) transmetteurs de telle sorte que
• les données utiles (ND) sont transmises de façon codée à la seconde station d'abonné (MS2) par au moins un premier message (SIG1), et
• soit le code (S) pour les données utiles (ND) codées et des informations relatives aux droits d'utilisation (R) de la seconde station d'abonné (MS2) sur les données utiles (ND) sont transmis par un second message (SIG2)
• soit le code (S) pour les données utiles (ND) codées est transmis de façon spécifique à la station d'abonné et des informations relatives aux droits d'utilisation (R) de la seconde station d'abonné (MS2) sur les données utiles (ND) sont transmis par le au moins un premier message (SIG1),
■ des moyens (M3) pour le traitement de l'invitation de la première station d'abonné (MS1),
■ avec des moyens (M4) pour la mémorisation des données utiles (ND) non codées et
■ avec des moyens (M5) pour la transmission d'information d'identification des données utiles (ND) stockées.

15. Dispositif (E1) pour la transmission de données utiles (ND), qui sont transmises d'une première station d'abonné (MS1), le cas échéant au moyen d'autres équipements (E2) transmettant des données utiles (ND), à une seconde station d'abonné (MS2),
**caractérisé par**
■ des moyens (M2) pour la réception d'un signal (SIG) de la première station d'abonné (MS1), comprenant
- les données utiles (ND) non codées,
- des informations relatives aux droits d'utilisation (R) de la seconde station d'abonné (MS2) sur les données utiles (ND),
- une invitation envoyée à un ou plusieurs des équipements (E1, E2) transmetteurs pour transmettre les données utiles (ND) de telle sorte que
• les données utiles (ND) sont transmises de façon codée à la seconde station d'abonné (MS2) par au moins un premier message (SIG1), et
• soit le code (S) pour les données utiles (ND) codées et des informations relatives aux droits d'utilisation (R) de la seconde station d'abonné (MS2) sur les données utiles (ND) sont transmis par un second message (SIG2)
• soit le code (S) pour les données utiles (ND) codées est codé de façon spécifique à la station d'abonné et des informations relatives aux droits d'utilisation (R) de la seconde station d'abonné (MS2) sur les données utiles (ND) sont transmis par le au moins un premier message (SIG1),
■ avec des moyens (M3) pour le traitement de l'invitation de la première station d'abonné (MS1),
■ des moyens (M6) pour le codage des données utiles (ND) non codées et
■ des moyens (M7) pour le stockage du code pour les données utiles (ND) codées et
■ des moyens (M8) pour la transmission des données utiles (ND) codées et l'information d'identification du code.
